# EUROPÄISCHE PATENTSCHRIFT

(11) **EP 1 194 865 B1**
(45) Veröffentlichungstag und Bekanntmachung des Hinweises auf die Patenterteilung: **06.08.2003**
(21) Anmeldenummer: 00940190.2
(22) Anmeldetag: 13.05.2000
(51) Int. Cl.: G06F 17/00

(54) **VERFAHREN ZUR DATENPFLEGE IN EINEM NETZWERK TEILWEISE REPLIZIERTER DATENBANKSYSTEME**
METHOD FOR DATA CARE IN A NETWORK OF PARTIALLY REPLICATED DATABASE SYSTEMS
PROCEDE DE TENUE DE FICHIERS DANS UN RESEAU DE SYSTEMES DE BANQUES DE DONNEES EN PARTIE REPLIQUES

(30) Priorität: 18.06.1999 DE 19928035; 14.10.1999 EP 99120009
(43) Veröffentlichungstag der Anmeldung: 10.04.2002
(73) Patentinhaber: SAP Aktiengesellschaft, 69190 Walldorf (DE)
(72) Erfinder: PAULY, Heinz, 67071 Ludwigshafen (DE); BRENDLE, Rainer, 69161 Neckargemünd (DE)
(74) Vertreter: Pfeifer, Hans-Peter, Dr.
(86) Internationale Anmeldenummer: DE0001552
(87) Internationale Veröffentlichungsnummer: WO00079408

(56) Entgegenhaltungen:
- US-A- 5 870 765
- US-A- 5 873 096

## Beschreibung

Die Erfindung betrifft ein Verfahren zur Datenpflege in einem Netzwerk teilweise replizierter Datenbanksysteme, insbesondere relationaler Datenbanksysteme. Gegenstand der Erfindung ist auch ein nach einem solchen Verfahren arbeitendes Datenbanksystem, ein Computerprogrammprodukt für ein solches Datenbanksystem sowie ein Datenträger mit einem solchen Computerprogrammprodukt.

Datenbanken, insbesondere relationale Datenbanken, werden vielfach zur Verwaltung von Daten eingesetzt, die in Datenverarbeitungsanlagen verarbeitet werden. In relationalen Datenbanken bilden die Daten eine Vielzahl zweidimensionaler Tabellen, die eine Relation beschreiben. Eine Tabelle kann sich z.B. auf ein Objekt und diesem Objekt eindeutig zuordenbare Daten beziehen. Beispielsweise können die Kundendaten eines Unternehmens in einer Tabelle "Kunde" gespeichert sein, deren Spalten unterschiedliche Attribute der Kunden (Name, Adresse, Ansprechpartner, Umsätze etc.) betreffen. Die Werte unterschiedlicher Kunden bilden die Reihen der Tabelle. Nicht nur Objekte, sondern auch Beziehungen zwischen Objekten werden in relationalen Datenbanken als Tabellen dargestellt. Wenn beispielsweise ein Auftrag für einen bestimmten Kunden ausgeführt wird, enthält die zur Verwaltung der Aufträge generierte Tabelle "Auftrag" ein Attribut "für Kunde", durch die die Beziehung Kunde-Auftrag definiert wird. Derartige Pointer spielen zur Darstellung von Beziehungen zwischen Objekten, die durch unterschiedliche Tabellen einer Datenbank beschrieben werden, eine große Rolle.

Infolge der weiten Verbreitung von tragbaren Rechnern (Laptops) stellt sich vielfach die Aufgabe, die auf einem zentralen Datenbanksystem (Datenbankserver) hinterlegten Daten auf eine Vielzahl von lokalen Datenbanksystemen, die beispielsweise auf Laptops installiert sind, zu replizieren. Die lokale Datenbank des Laptops wird von dessen Benutzer offline (ohne ständige Verbindung zu dem zentralen Datenbankserver) benutzt. Dabei werden die Daten nicht nur aus der lokalen Datenbank abgerufen, sondern auf Basis lokal gewonnener Informationen auch geändert, ergänzt oder gelöscht.

Ein typisches Beispiel sind Kundenbetreuungssysteme, die auch als SFA(Sales Force Automation)- oder CRM(Customer Relation Management)-Systeme bezeichnet werden. Derartige Systeme sind besonders auf die EDV-Anforderungen der Kundenberatung, Kundenbetreuung und des Vertriebs zugeschnitten. Hierzu gehört, daß die Außendienstmitarbeiter des Unternehmens mit einem Laptop ausgerüstet werden, der in einer eigenen lokalen Datenbank alle Daten enthält, die der jeweilige Außendienstmitarbeiter (beispielsweise aufgrund seines Vertriebsgebietes und der von ihm betreuten Kunden) benötigt.

Die Erfindung bezieht sich allgemein auf offline-verteilte Datenbank-Netzwerke, bei denen die Speicherung der Daten in mehreren Datenbanksystemen unterschiedlicher Computer (verteilt) erfolgt, die nicht ständig miteinander verbunden (offline) sind. Selbstverständlich können an solchen Datenbank-Netzwerken als lokale Datenbanksysteme außer Laptops andere stationäre oder mobile Rechnersysteme mit jeweils eigenen Datenbanken beteiligt sein.

In einem offline-verteilten Datenbank-Netzwerk werden die Daten zwischen den beteiligten Datenbanksystemen üblicherweise durch Nachrichten (Messages) ausgetauscht. In einer sogenannten Hub-Struktur erfolgt der Austausch der Messages sternförmig, d.h. Nachrichten werden von den lokalen Datenbanksystemen nur an das zentrale Datenbanksystem übermittelt, dort verarbeitet und im erforderlichen Umfang an andere lokale Datenbanksysteme des Netzwerkes ("Knoten") weitergeleitet. Ein direkter Datenaustausch zwischen den lokalen Datenbanksystemen findet in einem Datenbank-Netzwerk mit Hub-Struktur nicht statt.

Nachfolgend wird das zentrale Datenbanksystem als Zentralsystem bezeichnet. Für die lokalen Datenbanksysteme des Datenbank-Netzwerkes wird die Bezeichnung Knotensysteme verwendet.

Die Erfindung bezieht sich insbesondere auf ein Datenbank-Netzwerk mit Hub-Struktur. Selbstverständlich kann dieses Datenbank-Netzwerk bzw. können die daran beteiligten Datenbanksysteme mit weiteren Computersystemen vernetzt sein, zwischen denen die Daten nicht in einer Hub-Struktur ausgetauscht werden. Die Knotensysteme des erfindungsgemäßen Datenbank-Netzwerksystems können auch selbst zugleich das Zentralsystem eines nachgeordneten, ebenfalls sternförmig organisierten, Datenbank-Netzwerksystems sein, so daß eine Baumstruktur entsteht.

In der Regel werden die an dem erfindungsgemäßen Datenbank-Netzwerk beteiligten Computersysteme nicht nur ein Datenbanksystem, sondern auch andere Anwendungen enthalten, die unmittelbar (ohne Berücksichtigung der Hub-Struktur) miteinander kommunizieren. Notwendig ist jedoch, daß der Datenaustausch, der zur Pflege der an dem Datenbank-Netzwerk beteiligten Datenbanken notwendig ist, in der beschriebenen Weise sternförmig erfolgt.

Mit der Pflege offline-verteilter Datenbank-Netzwerke sind schwierige Probleme verbunden.

Die lokalen Datenbanken der Knotensysteme können und sollen keine vollständige Kopie der zentralen Datenbank sein. Zum einen reicht die Speicherkapazität hierfür in der Regel nicht aus. Zum zweiten würde die ständige Pflege von Daten, die in den Knotensystemen nicht wirklich benötigt werden, zu inakzeptablen Rechen- und Verbindungszeiten führen. Schließlich sprechen Sicherheitsprobleme dagegen, umfassende Daten eines Unternehmens vielfach vollständig zu replizieren. Daraus resultiert die Aufgabe, die zentrale Datenbank des Zentralsystems in den lokalen Datenbanken der Knotensysteme selektiv teilweise so zu replizieren, daß jedem Knotensystem die jeweils von ihm benötigten Daten zur Verfügung stehen.

Ein weiteres Problem resultiert daraus, daß Datenänderungen in unterschiedlichen Teilsystemen des Netzwerks registriert werden, die für andere Teilsysteme bedeutsam sind und im Rahmen der Datenpflege (Data Maintenance) in deren Datenbanken eingearbeitet werden müssen. Beispielsweise wird eine Datenänderung lokal registriert, wenn ein Außendienstmitarbeiter einen Abschluß macht und demzufolge in der Datenbank seines Knotensystems einen Auftrag generiert, wenn er einen neuen Ansprechpartner bei einem Kunden in die Datenbank aufnimmt und den bisherigen Ansprechpartner löscht oder wenn er eine Adresse eines Kunden ändert. Diese Beispiele zeigen, daß alle drei in der Datenbanktechnik üblichen Änderungsoperationen Neuanlage ("Insert"), Modifikation ("Update") und Löschung ("Delete") lokal anfallen. Außerdem werden Änderungsinformationen in der Regel in großem Umfang in der zentralen Datenbank verarbeitet, beispielsweise wenn sich Produktdaten (die selbstverständlich auch von den Außendienstmitarbeitern benötigt werden) ändern, neue Produkte eingeführt oder bisherige Produkte gelöscht werden. Nachfolgend wird als zusammenfassende Bezeichnung der den Datenbankoperationen Update, Insert und Delete zugrundeliegenden Informationen der Begriff "Änderungsinformationen" verwendet.

Die Notwendigkeit, lokale Änderungen in jeder der beteiligten Datenbanken zuzulassen, führt dazu, daß die Datenintegrität zwischen dem Zentralsystem und den Knotensystemen (d.h. die Konsistenz der an dem Gesamtsystem beteiligten Datenbanken) mit zunehmender Zahl der erfolgten Änderungen abnimmt. Um die Datenkonsistenz zu gewährleisten, ist es notwendig, die Inhalte der offline-verteilten Datenbanken von Zeit zu Zeit in Übereinstimmung zu bringen. Da Datenänderungen in jedem an dem Datenbank-Netzwerk beteiligten Computersystem vorgenommen werden können, müssen die geänderten bzw. ergänzten Daten in der zentralen Datenbank und den lokalen Datenbanken miteinander verglichen und in dem erforderlichen Umfang geänderte bzw. neue Daten ausgetauscht werden. An diesen Datenaustausch sind unter anderem folgende Anforderungen zu stellen:
- Alle Updates müssen genau denjenigen Teilnehmern des Gesamtsystems, die sie benötigen, mitgeteilt werden;
- neue Daten müssen in alle lokalen Datenbanken, die sie benötigen, eingearbeitet werden (Insert) und
- alle Daten, die in einem der Teilsysteme nicht mehr benötigt werden, müssen gelöscht werden (Delete).

Der mit der Pflege offline-verteilter Datenbank-Netzwerke verbundene Datenaustausch ist infolge dieser Anforderungen außerordentlich komplex, insbesondere wenn man berücksichtigt, daß an dem Netzwerk eine große Anzahl von Computersystemen beteiligt sein kann. Infolge der weltumspannenden Tätigkeit internationaler Organisationen haben offline-verteilte Datenbank-Netzwerke teilweise mehrere tausend oder sogar mehrere zehntausend Teilnehmer.

In dem US-Patent 5,873,096 ist ein Verfahren beschrieben, bei dem die Änderungsinformationen zwischen dem Zentralsystem und den Knotensystemen mittels eines Datenkonstrukts übertragen werden, das als Docking Object bezeichnet wird. Das Docking Object enthält (in Form von Identifikationsschlüsseln (Identifiers) als Verweis auf entsprechende Datenbankinhalte) die Änderungsinformation und zugleich die Verteilungsinformation, welche die Adressaten der Änderungsinformation bestimmt, also festlegt, an welche Knotensysteme die jeweils in dem Docking Object enthaltene Änderungsinformation übermittelt werden soll. Diese Verteilungsinformation wird als "visibility rules" bezeichnet. Alle Änderungsinformationen in dem gesamten Datenbank-Netzwerk werden durch entsprechende Übertragungs- und Mischprozesse in einem zentralen Änderungsregister (Central Update Log) zusammengefaßt und von dort - innerhalb des Zentralsystems - auf Teilregister (Partial Update Logs) verteilt, deren Anzahl der Anzahl der Knotensysteme entspricht. Diese Verteilung geschieht dadurch, daß auf jede Datenänderung die Visibility Rules für jedes einzelne Knotensystem (also für N-Knotensysteme N mal) angewandt werden. Dabei kann es sich entweder um eine unmittelbare Anwendung einer als SQL-SQL-Statement codierten Verteilungsregel handeln oder es erfolgt ein Verweis auf ein "Related Docking Object". Letzteres gilt in Fällen, bei denen die Änderungsinformation des gerade behandelten Docking Objects in gleicher Weise an die Knotensysteme verteilt wird, wie bei dem Related Docking Object. Die auf diese Weise in den Teilregistern gesammelten Änderungsinformationen werden an die einzelnen Knotensysteme übertragen, wenn diese eine Verbindung zu dem Zentralsystem herstellen.

Durch dieses Verfahren, das einer Filterung der in dem zentralen Änderungsregister enthaltenen Daten mittels der "visibility rules" entspricht, können in dem Gesamtsystem alle Datenänderungen (Update, Insert und Delete) selektiv nach vorgegebenen Regeln an die Knotensysteme verteilt werden. Das Verfahren ist jedoch unflexibel, insbesondere hinsichtlich der Anpassung des Datenbank-Netzwerksystems an unterschiedliche Anforderungen. Außerdem ist es sehr aufwendig hinsichtlich der erforderlichen Rechenzeiten. Bei Datenbanksystemen mit einer großen Zahl von Knotensystemen wird deswegen die Performance unzureichend.

Der Erfindung liegt auf dieser Basis die Aufgabe zugrunde, ein verbessertes Verfahren zur Verteilung der erforderlichen Änderungsinformationen an die Knotensysteme eines offline-verteilten Datenbank-Netzwerks zur Verfügung zu stellen.

Die Aufgabe wird gelöst durch ein Verfahren zur Datenpflege in einem offline-verteilten Datenbank-Netzwerksystems, welches ein Zentralsystem mit einer zentralen Datenbank und eine Mehrzahl von Knotensystemen mit lokalen Datenbanken umfaßt, wobei die lokalen Datenbanken mindestens teilweise unterschiedliche Teilmengen der Daten der zentralen Datenbank enthalten, Änderungsinformationen zu den in den Datenbanken des Datenbank-Netzwerksystems gespeicherten Daten in einer Mehrzahl der Knotensysteme erfaßt werden, die Änderungsinformationen bei bestehender Online-Verbindung als in mehreren unterschiedlichen Typen strukturierte, einen Identifikationsschlüssel enthaltende Replikationsobjekte von den Knotensystemen zu dem Zentralsystem oder von dem Zentralsystem zu den Knotensystemen übertragen werden, die Replikationsobjekte bei fehlender Online-Verbindung in einer Ausgangsschlange für eine spätere Übertragung bereitgestellt werden, die Replikationsobjekte mit den Änderungsinformationen in dem Zentralsystem in einem Replikations-Algorithmus mittels mindestens einer Lookup-Tabelle den Knotensystemen, an die sie übermittelt werden sollen, als Adressaten zugeordnet werden und die mindestens eine Lookup-Tabelle unter Berücksichtigung der Änderungsinformationen in einem Realignment-Algorithmus aktualisiert wird.

Die Erfindung wird nachfolgend anhand eines in den Figuren dargestellten Ausführungsbeispiels näher erläutert. Die in diesem Zusammenhang beschriebenen Besonderheiten der Erfindung können einzeln oder in Kombination verwendet werden, um bevorzugte Ausgestaltungen der Erfindung zu schaffen. Es zeigen:
- Fig. 1: eine schematische Darstellung wesentlicher Elemente der Architektur eines erfindungsgemäßen Datenbank-Netzwerksystems;
- Fig. 2: die Struktur von im Rahmen der Erfindung verwendeten Replikationsobjekten (BDocs);
- Fig. 3: ein Ablaufschema eines Programmoduls zur Behandlung von lokal (in einem Knotensystem) gewonnenen Änderungsinformationen;
- Fig. 4: ein Ablaufschema eines Verbindungsmanagers, der die temporäre Verbindung zwischen einem Knotensystem und dem Zentralsystem herstellt und überwacht;
- Fig. 5: ein Ablaufschema der Bearbeitung von BDocs in dem Zentralsystem mittels einer Flußsteuerung;
- Fig. 6: ein Ablaufschema einer Replikation des Typs "Bulk-Replikation";
- Fig. 7: ein Ablaufschema einer Replikation des Typs "intelligente Replikation";
- Fig. 8: ein Ablaufschema einer Replikation des Typs "abhängige Replikation";
- Fig. 9: einen ersten Teil eines Ablaufschemas eines Realignment-Programmoduls;
- Fig. 10: eine Fortsetzung des Ablaufschemas von Figur 9;
- Fig. 11: einen ersten Teil eines Ablaufschema eines Programmoduls zur Durchführung des Interlinkage-Realignment von Fig. 10;
- Fig. 12: eine Fortsetzung des Ablaufschemas von Fig. 11;
- Fig. 13: ein Ablaufschema eines Extractor-Programmoduls;
- Fig. 14: ein Ablaufschema eines Bulk-Subskriptionsprüfmoduls;
- Fig. 15: ein Ablaufschema eines Objekt-Subskriptionsprüfmoduls.

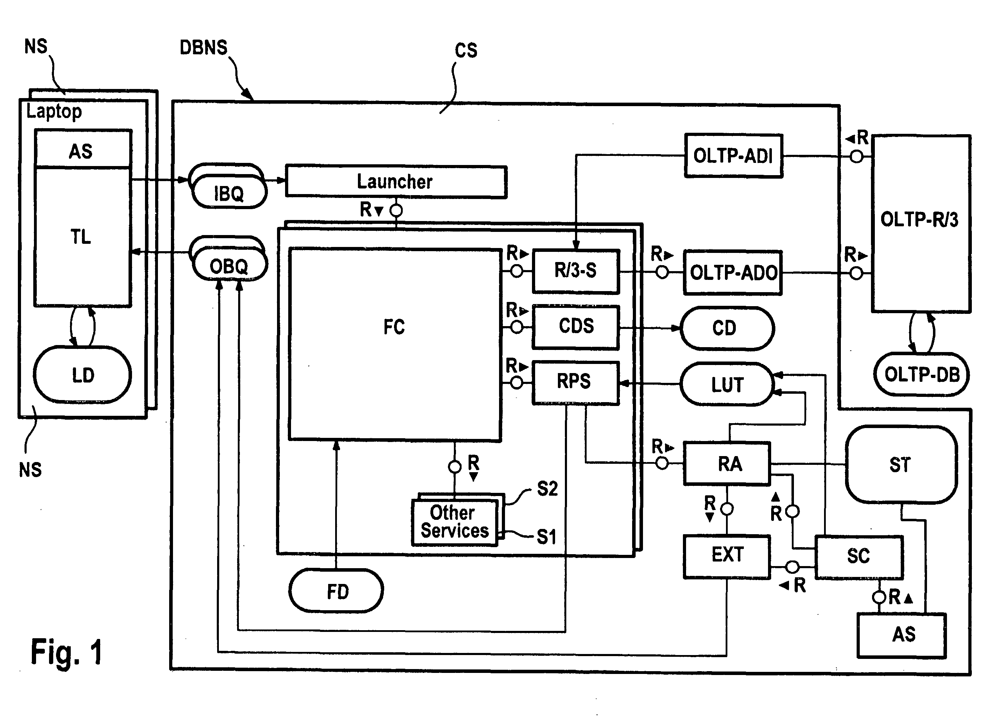

Figur 1 gibt einen Überblick über die Architektur eines erfindungsgemäßen Datenbank-Netzwerksystems DBNS (Data Base Network System), das aus einem Zentralsystem CS (Central System) und einer Mehrzahl von Knotensystemen NS (Node System) besteht. Es kann sich beispielsweise um ein CRM-System handeln, wobei die Knotensysteme NS vor allem durch die Laptops der Außendienstmitarbeiter des Unternehmens gebildet werden. Sie werden auch als mobile Klienten des Systems bezeichnet. Der Außendienstmitarbeiter kann Informationen (beispielsweise Bestellinformationen) in sein Knotensystem NS eingeben und erforderliche Daten (beispielsweise über die von ihm bearbeiteten Kunden und deren Aufträge) in seinem Knotensystem NS abrufen. Um diese Funktionen temporär autonom erfüllen zu können, sind alle hierfür erforderlichen Daten in einer lokalen Datenbank LD (Local Data Base) gespeichert.

An dem Datenbank-Netzwerksystem können außer mobilen Klienten auch andere Systeme als Knotensysteme beteiligt sein, so beispielsweise stationäre Computersysteme des Unternehmens oder von Kunden, die entweder ständig (online) oder temporär (offline) mit dem Zentralsystem CS verbunden sind. Auf diesem Wege können beispielsweise unmittelbare Bestellungen der Kunden ohne Mitwirkung eines Außendienstmitarbeiters abgewickelt werden. Auch die Datenbanken solcher weiterer Computersysteme können lokale Datenbanken LD des in Hub-Struktur organisierten erfindungsgemäßen Datenbank-Netzwerksystems DBNS bilden (wobei sie zugleich in andere Netzwerke eingebunden sein können).

In den Knotensystemen NS werden (unabhängig voneinander) Änderungsinformationen generiert, die auch für das Zentralsystem CS und andere Knotensysteme NS bedeutsam sind. Je nach der konkretene Systemkonfiguration können weitere Änderungsinformationen in dem Zentralsystem CS selbst generiert werden. Das Zentralsystem sorgt dafür, daß jedes Knotensystem die notwendige und zulässige Information erhält. Seine zentrale Datenbank CD wird auch als konsolidierte Datenbank (Consolidated Data Base) bezeichnet, weil sie den (hinsichtlich des Datenaustausches zwischen den an dem Datenbank-Netzwerksystem DBNS beteiligten Datenbanken) "öffentlichen" Inhalt aller lokalen Datenbanken LD der Knotensysteme NS (zum Zeitpunkt des letzten Datenaustausches) enthält. Als "öffentlich" werden dabei Daten bezeichnet, die in dem Datenbank-Netzwerksystem ausgetauscht werden. Selbstverständlich können die lokalen Datenbanken daneben Informationen enthalten, die für alle anderen Beteiligten des Datenbank-Netzwerksystems CBNS ohne Bedeutung und deswegen "nicht öffentlich" sind. Die zentrale Datenbank CD ermöglicht es, die lokalen Datenbanken LD jeweils mit den erforderlichen Daten zu versorgen und, falls notwendig, auch die lokalen Datenbanken LD wiederherzustellen.

Die Knotensysteme NS werden in Abständen, beispielsweise am Abend jeden Tages, über geeignete Kommunikationswege (z.B. Telefonleitungen, das Internet oder ein Intranet) mit dem Zentralsystem CS verbunden. Dabei werden die seit der letzten Verbindung gesammelten Daten an das Zentralsystem CS übertragen. Außerdem übernimmt das Knotensystem NS bei dieser Gelegenheit seine eigenen verarbeiteten Daten des jeweils vorausgegangenen Zeitraums und neu eingegebene Daten anderer Knotensysteme NS oder des Zentralsystems CS.

Der gesamte Datenfluß zwischen den Anwendungsprogrammen AS (Application Software) und den lokalen Datenbanken LD der Knotensysteme NS läuft über einen in den Knotensystemen implementierten Transaction Layer TL. Dadurch können sämtliche Änderungen der lokalen Datenbank LD, bevor sie persistent gemacht werden, registriert werden. Auch der Datentransfer aus dem Zentralsystem CS in die Knotensysteme NS erfolgt ausschließlich über deren Transaction Layer TL.

Der Transaction Layer TL ist transparent, d.h. die Anwendungsdaten, die von dem Anwendungsprogramm AS an die lokale Datenbank LD übergeben werden, werden durch den Transaction Layer TL nicht geändert. Ausgangsseitig kann der Transaction Layer plattformübergreifend mit unterschiedlich implementierten lokalen Datenbanken LD zusammenarbeiten.

In dem Beispielsfall eines CRM-Systems beziehen sich die innerhalb des Datenbank-Netzwerks ausgetauschten Daten auf geschäftliche Vorgänge, wie beispielsweise Kunden, Aufträge und dergleichen. Sie werden deshalb als Businessdaten bezeichnet. Der Datenaustausch in dem Datenbank-Netzwerksystem DBNS erfolgt mittels strukturierter, ein Identifikationsmerkmal (ID-Schlüssel) aufweisender Replikationsobjekte, die als "BDoc" bezeichnet werden. Die BDocs sind Datencontainer mit einer jeweils für einen BDoc-Typ vorgegebenen Struktur, wie nachfolgend noch näher erläutert wird. Sie bilden die atomare Einheit der Replikation in dem Datenbank-Netzwerksystem DBNS. Beispielsweise enthält ein BDoc für einen bestimmten Auftrag Daten, die zu dem Auftrag gehören, unabhängig davon wie diese in der logischen Struktur der beteiligten Datenbanken LD und CD (als Tabellen einer relationalen Datenbank) vorliegen. Die Steuerdaten, die für die Funktion der Knotensysteme NS und des Zentralsystems CS erforderlich sind, sind in einem logisch gesonderten Teil der jeweiligen Datenbanken LD bzw. CD gespeichert, der als Repository bezeichnet wird.

Bei dem in Figur 1 dargestellten Ausführungsbeispiel steht das Zentralsystem CS mit einem weiteren System in Verbindung, das als OLTP-R/3 bezeichnet ist. OLTP-R/3 ist ein ERP (Enterprise Resource Planning)-System der SAP AG, Walldorf, Deutschland. Solche ERP-Systeme ermöglichen die EDV-Unterstützung unterschiedlichster Unternehmensbereiche, wie beispielsweise Personal, Vertrieb, Lagerhaltung etc. auf Basis einer gemeinsamen Datenbank, die in Figur 1 als OLTP-DB bezeichnet ist. Das Zentralsystem CS des Datenbank-Netzwerksystems DBNS kann beispielsweise über ein LAN (Local Area Network) mit dem ERP-System OLTP-R/3 verbunden sein.

Soweit nachfolgend die für die Übermittlung der Änderungsinformationen verwendeten Replikationsobjekte als "BDoc", das Zentralsystem als "CRM-System" und das mit dem Zentralsystem CS verbundene ERP-System als "OLTP-R/3" bezeichnet werden, geschieht dies beispielhaft ohne Beschränkung der Allgemeinheit. Die beschriebenen Besonderheiten gelten allgemein für die im Rahmen der Erfindung verwendeten Funktionen entsprechender Replikationsobjekte und Computersysteme auch in anderen Software-Umgebungen.

Die Datenübermittlung zwischen den Knotensystemen NS und dem Zentralsystem CS - optional auch zu weiteren externen Systemen - erfolgt mittels eines Funktionsmoduls, der als qRFC (Queued Remote Funktion Call) bezeichnet wird. Dabei handelt es sich um einen Fernaufruf (Remote Call), bei dem durch zusätzliche intelligente Merkmale sichergestellt wird, daß qRFCs in einer Schlange nacheinander bearbeitet und dabei für mehrere Calls benötigte gemeinsame Daten nur einmal gespeichert werden.

Die Datenverarbeitung in dem Zentralsystem CS erfolgt mit Hilfe von Programmodulen, die als "Service" bzw. als "Adapter" bezeichnet werden. Ein Service stellt eine bestimmte Funktion, die auf ein BDoc angewendet werden kann, zur Verfügung. Ein Adapter ist ein spezieller Typ von Service, der zusätzlich die Verbindung zu einem externen System ermöglicht. Für jedes externe System existiert ein eigener Adapter, der im Zusammenhang mit dem BDoc-Modelling auf Basis von Repository-Einträgen spezifisch für den jeweiligen BDoc-Typ generiert wird. Er dient dazu, das Protokoll und die Datenstruktur des externen Systems für das Zentralsystem CS zu übersetzen.

Die Flußsteuerung FC (Flow Control) ist die zentrale Komponente des CS-Systems. Sie bewirkt auf Basis von Flußdefinitionen FD die Verarbeitung von BDocs, indem sie eingehende BDocs in der richtigen Reihenfolge an die Services und Adapter übergibt und erforderlichenfalls eine Fehlerbehandlungsprozedur auslöst. Dies erfolgt für alle Services und Adapter generisch über das gleiche Interface. Die Flußdefinitionen FD sind spezifisch für den BDoc-Typ in einem Steuerdatenspeicher (Repository) definiert.

Die von den Knotensystemen NS übermittelten BDocs werden in einer Eingangsschlange IBQ gespeichert und von dort mittels eines Launchers LCH an die Bearbeitung durch die Flußsteuerung FC übergeben.

Die Kommunikation mit dem ERP-System OLTP-R/3 erfolgt über einen entsprechenden Service R/3-S und zwei Adapter, nämlich einen Outbound-Adapter OLTP-ADO und einen Inbound-Adapter OLTP-ADI.

Ein Datenbankservice CDS (Consolidated Database Service) dient zur Speicherung von Daten in der konsolidierten Datenbank CD. Der Service CDS führt keine Prüfung auf Datenkonsistenz durch, wenn er Daten in die Datenbank CD schreibt. Derartige Checks müssen von den Knotensystemen durchgeführt werden, die Daten an das Zentralsystem übertragen. Zum Lesen der Datenbank CD verwenden die anderen Programmodule nicht den Datenbankservice CDS, sondern ein Extractor-Modul EXT, das bei Bedarf aufgerufen werden kann.

Ein Replikations-Service RPS dient dazu, Daten aus dem Zentralsystem CS im erforderlichen Umfang in den Knotensystemen NS zu replizieren. Er übernimmt die bearbeiteten BDocs und bestimmt deren Adressaten, indem er sie aus einer Lookup-Tabelle LUT (Lookup Table; nachfolgend wird nur noch die Kurzbezeichnung "LUT" verwendet) liest. Die LUT ist vorzugsweise eine sehr einfache zweispaltige Tabelle, die den Primärschlüsseln der BDocs jeweils die Schlüssel (Site-ID) sämtlicher Adressaten zuordnet. Sie ist indiziert und der Zugriff erfolgt mit logarithmischem Zeitverhalten, so daß auch bei einer sehr umfangreichen LUT die Adressaten eines BDoc sehr schnell herausgelesen werden können.

Wenn der Replikations-Service RPS feststellt, daß infolge eines gegenwärtig verarbeiteten BDocs die Adressatenzuordnung in der LUT geändert werden muß, generiert er einen Realignment-Job für ein Realignment-Modul RA. Während des Realignment verwendet das Realignment-Modul Replikationsregeln, die in einer Subskriptionstabelle ST (Subscription Table) abgelegt sind. Außerdem übergibt das Realignment-Modul RA mittels eines Extractor-Moduls Änderungsinformationen für die Knotensysteme NS an die Flußsteuerung, die sie in einer mit OBQ bezeichneten Ausgangsschlange (Outbound Queue) zur Übertragung an die Knotensysteme NS bereitstellt.

Für weitere Aufgaben können zusätzliche Services S1,S2 implementiert sein. Da die erwähnten Programmodule spezifisch für jeden BDoc-Typ definiert sind, symbolisieren die in Fig. 1 dargestellten Symbole (z.B. CDS, RPS) jeweils eine Serie der entsprechenden Module für alle in dem Datenbank-Netzwerksystem verwendeten BDoc-Typen. Auch das Symbol LUT repräsentiert vorzugsweise eine Mehrzahl von Lookup-Tabellen für unterschiedliche BDoc-Typen.

Für die Realisierung der Software in dem Zentralsystem CS wird vorzugsweise die Programmiersprache ABAP der SAP AG und deren R/3-Technologie verwendet. Sie ist transparent gegenüber unterschiedlichen Plattformen. Die Funktionen des Zentralsystems CS können auf mehrere Maschinen verteilt sein. Insbesondere können gesonderte Maschinen für die Datenbank und für die Bearbeitung von Anforderungen und die Systemverwaltung eingesetzt werden.

In der Praxis ist es zweckmäßig, für die Zwecke der Systemverwaltung eine Maschine einzusetzen, die als Administrationsstation AS bezeichnet wird und beispielsweise unter Windows NT laufen kann.

Ein Subskriptionsprüfmodul SC (Subscription Checker) dient dazu, die LUT zu aktualisieren, wenn im Rahmen der Systemverwaltung an der Administrationsstation Systemänderungen durchgeführt werden, die für die Verteilung von Änderungsinformationen an die Adressaten von Bedeutung sind. Bevorzugt werden hierzu - in Abhängigkeit von dem BDoc-Typ - zwei unterschiedliche Typen des Subskriptionsprüfmoduls SC verwendet, wobei ein erster Typ unmittelbar Änderungen in einer LUT erzeugt, während ein zweiter Typ solche Änderungen indirekt unter Verwendung des Realignment-Moduls bewirkt.

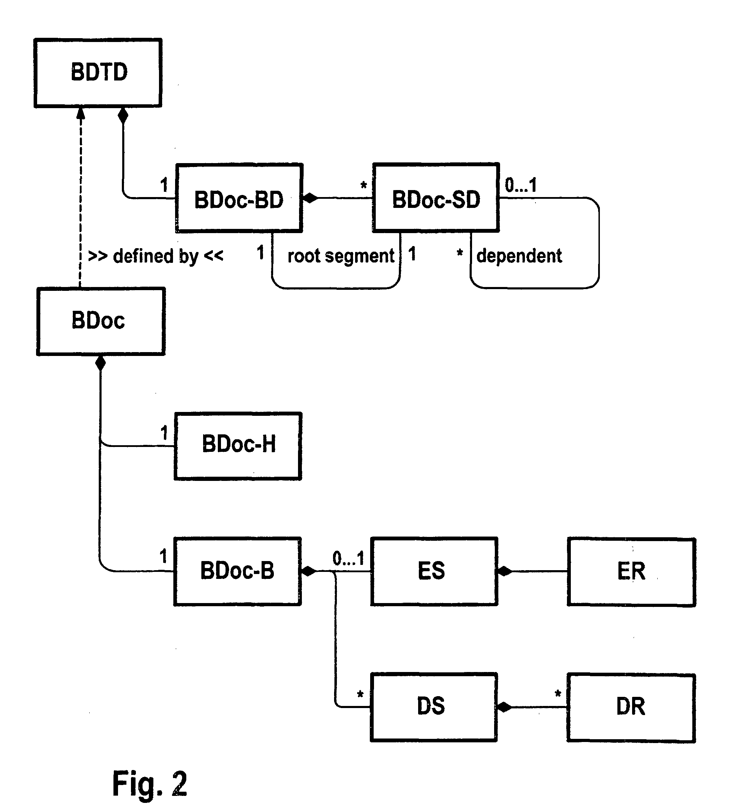

Anhand von Figur 2 wird die Struktur der BDocs näher erläutert.

Ein wesentliches Merkmal der für die Erfindung verwendeten Replikationsobjekte (BDocs) ist, daß sie eine logische Einheit bilden, die sicherstellt, daß die darin enthaltene Änderungsinformation genau einmal transportiert und verarbeitet wird. Die BDocs bilden also insbesondere eine Klammer, durch die sichergestellt wird, daß eine Datenübertragung zu einem Empfänger nur dann als erfolgreich angesehen wird, wenn sie vollständig ist. Dies ist eine wichtige Voraussetzung für die vollständige und korrekte Replikation. Ohne diese Funktion der BDocs bestünde (beispielsweise bei Systemabstürzen) das Risiko, daß nur teilweise übertragene Altdaten als vollständig angesehen würden. Dies würde zu Replikationsfehlern führen.

Wie bereits erwähnt, ist ein BDoc ein Datencontainer, d.h. eine vorgegebene Struktur, in die unterschiedliche Daten eingefüllt werden. Man muß zwischen unterschiedlichen BDoc-Typen mit (in der Regel) unterschiedlichen Strukturen unterscheiden. Beispielsweise kann es BDoc-Typen "Kunde", "Produkt" etc. geben. Die einzelnen Exemplare (Instanzen) der BDocs enthalten dann die Daten eines bestimmten Kunden, Produktes etc.

Vorzugsweise dienen die BDocs zur plattformübergreifenden und applikationsübergreifenden Übertragung von Daten, d.h. sie erlauben die Datenübertrag zwischen Computersystemen, die unterschiedliche Plattformen (Betriebssystem und Datenbankverwaltungssystem) verwenden und in denen unterschiedliche Anwendungen implementiert sind. Um dies zu gewährleisten, muß die Struktur der beteiligten Datenbanksysteme in die BDocs abgebildet werden. Dies geschieht im Rahmen eines vorbereitenden Prozesses, der als BDoc-Modelling bezeichnet wird. Dabei werden entsprechend den Tabellen der Datenbanken Segmente der BDocs definiert. Die Segmente enthalten Links (in Form der entsprechenden Schlüssel) zu den entsprechenden Tabellen der Datenbanken. Die BDocs enthalten also - gemäß einer bevorzugten Ausführungsform - physisch nicht die Daten selbst, sondern Links zu den in den Datenbanken abgespeicherten Daten. Logisch bedeutet dies jedoch, daß sie einen Behälter zum Transport der Daten bilden.

Beispielsweise enthalten bei einer Datenbank mit Tabellen "Angebot-Kopf" und "Angebot-Positionen" entsprechende BDocs des Typs "Order Header" einen Link zu der Datenbanktabelle "Angebot-Kopf" (die die Stammdaten, z.B. Identifikation des Kunden, Angebotsnummer und das Datum eines Angebots enthält). Ein dem BDoc "Order Header" nachgeordnetes BDoc "Order-Item" enthält einen Link zu der Datenbanktabelle "Angebot-Positionen" (in der die Einzelpositionen der Angebote abgespeichert sind). In einfachen Fällen ist die Zuordnung zwischen Tabellen der beteiligten Datenbanken und Segmenten der BDocs wechselseitig eindeutig. Es gibt jedoch auch Fälle, bei denen Tabelleninhalte auf mehrere BDocs aufgeteilt oder Inhalte mehrerer Tabellen in ein BDoc zusammengefaßt werden.

Insgesamt stellen die BDocs eine Zerlegung der gesamten (im oben definierten Sinne) öffentlichen Datenmenge aller beteiligten Datenbanksysteme dar. Der Begriff "Zerlegung" ist dabei im mathematischen Sinne dahingehend zu verstehen, daß alle öffentlichen Daten der Datenbank genau einmal (überlappungsfrei und vollständig) in ein BDoc übernommen werden.

Aus dem Vorstehenden wird deutlich, daß die Gesamtheit der BDocs ein Abbild der öffentlichen Daten der an dem Datenbank-Netzwerksystem DBNS beteiligten Datenbanksysteme ist. Im Rahmen des BDoc-Modelling muß folglich die Struktur aller beteiligten Datenbanken auf semantischer Ebene berücksichtigt werden. Außerdem sind im Rahmen des BDoc-Modelling die Besonderheiten der Branche zu berücksichtigen, für die das Datenbank-Netzwerk verwendet wird. In der Praxis geschieht dies dadurch, daß seitens des Software-Herstellers ein branchenabhängiges Basis-Modelling geliefert wird, das als "Template" bezeichnet wird. Hierauf aufbauend erfolgt eine anwenderspezifische Anpassung im Rahmen der Implementierung des Systems bei einem bestimmten Unternehmen.

In Figur 2 zeigt der obere Teil die Struktur der Definition des BDoc-Typs. Die Struktur des BDocs selbst ist im unteren Teil dargestellt. Beide Strukturen sind in dem Repository des Zentralsystems CS abgespeichert.

Das BDoc besteht aus dem BDoc-Kopf(Header) BDoc-H und dem BDoc-Körper(Body) BDoc-B. Der BDoc-Header BDoc-H enthält Steuerungsinformationen wie beispielsweise den Typ ("Kunde", "Auftrag" ...) des BDocs, dessen Absender (Knotensystem NS) und eine Zeitmarkierung (Time Stamp). Aus Performance-Gründen ist es vorteilhaft, wenn er außerdem ein Duplikat des Primärschlüssels enthält.

Die Daten sind in dem BDoc-Körper BDoc-B enthalten. Durch ein Flag im Root-Segment wird angezeigt, welcher Datenbankoperation (Update, Insert oder Delete) die in dem BDoc codierte Änderungsinformation entspricht. Ein Daten-Rekord (Data Record) DR enthält die eigentlichen Daten. Die Struktur ist in der Definition des zugehörigen Datensegmentes (Data Segment) DS definiert. Die Segmente bilden eine Art Tabellenansicht der tatsächlichen physischen Tabellen. Optional enthält das BDoc auch ein Fehlersegment ES (Error Segment) mit einem oder mehreren Fehler-Rekords ER (Error Record).

Die Datenbereiche haben eine festgelegte Länge. Sie bestehen aus einem Schlüssel und Datenfeldern. Wenn sie eine Löschinformation enthalten, enthält nur das Schlüsselfeld gültige Daten. Wenn sie "insert"- oder "update"-Informationen enthalten, enthalten entweder alle Felder gültige Daten oder unveränderte Felder enthalten einen Voreinstellungswert (beispielsweise 0.0). Um anzuzeigen, ob ein Feld gefüllt oder unbenutzt ist, werden sogenannte "Sende-Bits" benutzt. Primärschlüssel und Felder, die bei Replikation und Realignment berücksichtigt werden müssen, werden immer gesendet (unabhängig davon, ob sie geändert wurden). Sende-Bits werden nur gesetzt, wenn der Wert tatsächlich geändert wurde.

Die Definition des BDoc-Typs, also die Information über die für den jeweiligen BDoc-Typ spezifische Struktur aus hierarchisch geordneten Elementen ist in der BDoc-Typ-Definition BDTD enthalten, die aus einer BDoc-Körper-Definition BDoc-BD und BDoc-Segment-Definitionen BDoc-SD besteht. Die BDoc-Körper-Definition BDoc-BD enthält genau ein Root-Segment, das nur einen einzigen Daten-Rekord enthält. Diese Bedingung muß eingehalten werden, um sicherzustellen, daß die in dem BDoc enthaltenen Informationen individuell an die jeweiligen Knotensysteme übermittelt oder in anderer Weise bearbeitet werden können. Beispielsweise darf in einem BDoc des Typs "Kunde" nur Informationen über einen einzigen Kunden gespeichert sein, damit die Kundeninformation individuell und gezielt für jeden einzelnen Kunden den entsprechenden Knotensystemen zugeleitet werden kann.

Während die Segmente in der BDoc-Typ-Definition BDTD hierarchisch strukturiert sind, gibt es bei der physischen Wiedergabe der BDocs selbst keine derartige Hierarchie. Die hierarchische Abhängigkeit ist in den BDocs dadurch enthalten, daß die Daten-Rekords DR abhängiger Segmente den Schlüssel ihrer übergeordneten Daten-Rekords enthalten.

Für die Performance des Systems ist wichtig, daß die BDocs logisch nur die jeweils notwendige Änderungsinformation übermitteln. Dies wird auch als "Netto-Feld-Übertragung" bezeichnet. Sie enthalten also nur im Falle eines Insert den kompletten Datensatz der jeweiligen Instanz des jeweiligen BDoc-Typs (also z.B. alle Daten zu einem Auftrag). Im Falle eines Update enthalten sie außer der Identifikation ihres Typs und der BDoc-Instanz - logisch gesehen - nur den Inhalt des geänderten Datenfeldes (also beispielsweise einer geänderten Straßenadresse eines Kunden. Im Falle eines Delete genügt die Übermittlung der erforderlichen Identifikationsschlüssel.

Die nachfolgend erläuterten Ablaufdiagramme beziehen sich auf das Beispiel eines CRM-Systems. Dabei wird das Zentralsystem CS auch als "CRM-Server" bezeichnet.

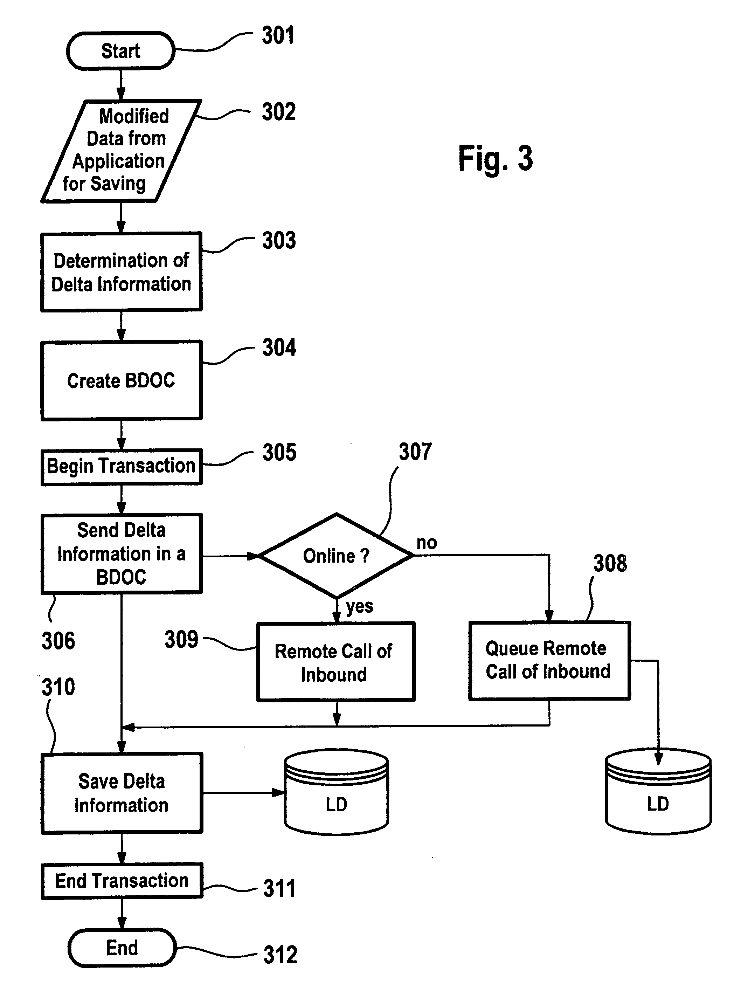

Figur 3 betrifft die Behandlung von Änderungsinformationen, die von den Knotensystemen NS ausgehen, d.h. zunächst in deren Anwendungsprogramm AS vorgenommen werden ("Upload"). Dieser Programmteil wird deshalb auch als "Application Modification Handling" bezeichnet. Er ist Bestandteil des Transaction Layer TL.

Nach dem Start des Application Modification Handling (Schritt 301) werden in dem Schritt 302 die von dem Anwendungsprogramm AS geänderten Daten, die zur Speicherung in der lokalen Datenbank LD vorgesehen sind, von dem Transaction Layer TL übernommen. Danach wird in dem gleichen Commit-Zyklus in dem Schritt 303 die in dem geänderten Datensatz enthaltene Neuinformation (Delta-Information) bestimmt und in dem Schritt 304 als Transferformat ein BDoc generiert, das - wie beschrieben - einen eindeutigen Schlüssel und die geänderte Information enthält.

Die nachfolgenden Schritte 305 bis 311 werden in dem gleichen Commit-Zyklus abgearbeitet. Sie bilden eine Transaktion in dem Sinn, daß sie zwingend vollständig ausgeführt werden müssen, d.h. daß jede Teiloperation der Transaktion nur ausgeführt wird, wenn auch alle anderen Teiloperationen ausgeführt wurden.

Im vorliegenden Fall bezieht sich die Transaktion auf die Operationen 306 "Delta-Information in einem BDoc an das Zentralsystem versenden" und 310 "Delta-Information in der lokalen Datenbank LD abspeichern". Durch die Programmierung als Transaktion wird sichergestellt, daß diese Operationen nur ausgeführt werden, wenn die Ausführung beider Operationen sichergestellt ist.

Im Anschluß an den Schritt 306 erfolgt in dem Schritt 307 eine Abfrage, ob das betreffende Knotensystem NS gerade mit dem Zentralsystem CS verbunden (online) ist. Bei einem positiven Ergebnis dieser Abfrage wird unmittelbar ein Remote Call an die Inbound Queue IBQ des Zentralsystems CS übermittelt. Das zu übermittelnde BDoc bildet einen Anhang des Remote Call.

In der Regel wird keine Online-Verbindung mit dem Zentralsystem CS bestehen. In diesen Fällen führt das negative Ergebnis der Abfrage 307 dazu, daß in dem Schritt 308 ein Remote Call in eine Ausgangsschlange gestellt wird, die in der lokalen Datenbank LD des Knotensystems NS abgespeichert wird.

Für diese Queue gelten ebenso wie für alle anderen Queues folgende Bedingungen:
- Es ist sichergestellt, daß jeder Aufruf der Schlange seinen Empfänger erreicht, anderenfalls wird ein Fehlersignal erzeugt (Guaranteed Delivery).
- Die Aufrufe der Schlange werden in der vorgegebenen Reihenfolge bearbeitet (In Order Processing)
- Jeder Aufruf wird genau einmal ausgeführt (Exactly Once)

In dem Schritt 310 werden die Änderungsinformationen in die lokale Datenbank LD eingearbeitet. Dabei löst der Transaction Layer TL die BDocs in Tabellen auf, wobei alle Datensätze aller zugehörigen Tabellen in einem Commit-Zyklus bearbeitet werden. Neuanlagen werden mittels SQL-Statement in der Datenbank angelegt. Änderungen werden netto (ebenfalls mittels SQL-Statement) eingearbeitet.

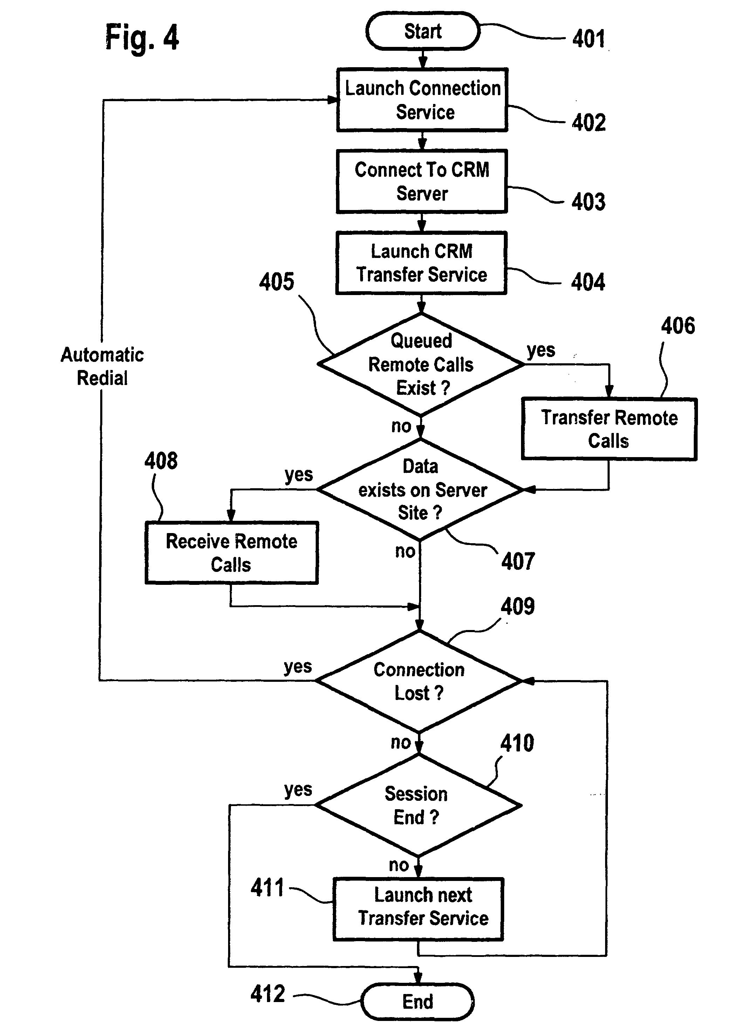

Figur 4 zeigt ein Ablaufschema des Softwaremoduls, das dazu dient, die für den Datenaustausch erforderliche Verbindung zwischen den beteiligten Computersystemen herzustellen, aufrechtzuerhalten und nach Erledigung des erforderlichen Datenaustausches zu beenden. Dieses Modul wird als ConTransManager CTM bezeichnet und ist in Figur 1 der Übersichtlichkeit halber nicht dargestellt. Es ist so angelegt, daß es vollautomatisch funktioniert, d.h. nach Aufruf des CTM ist keine Aktion des Benutzers mehr erforderlich.

Nach dem Start 401 des CTM wird in Schritt 402 ein Connection Service aufgerufen, durch den in dem Schritt 403 eine Verbindung mit dem Zentralsystem CS hergestellt wird. Dies umfaßt beispielsweise die Wahl der Telefonnummer, IP-Adresse, Paßwort etc. und entspricht üblicher Technik. Anschließend wird in Schritt 404 ein CRM-Transfer-Service aufgerufen, der dafür sorgt, daß die in der Ausgangsschlange des Transaction Layers TL des entsprechenden Knotensystems stehenden BDocs mittels Remote Call übermittelt werden. Solange solche Remote Calls existieren, werden sie aufgrund der Abfrage 405 in Schritt 406 nacheinander übermittelt. Wenn keine weiteren Remote Calls mehr vorhanden sind, wird die Abfrage 405 negativ beantwortet und der Ablauf geht zu der Abfrage 407 über, ob auf der Seite des Zentralsystems Daten für das entsprechende Knotensystem bereitstehen. Solange dies bejaht wird, werden sie in dem Schritt 408 an das Knotensystem übertragen.

Durch die Abfrage 409 "Verbindung verloren?" wird sichergestellt, daß im positiven Fall die Kontrolle an den Schritt 402 übergeht, der eine neue Verbindung mittels des Connection Service 402 herstellt. Im negativen Fall wird durch die Abfrage 410 "Session beendet?" festgestellt, ob noch andere Transfer-Services, die in dem Zentralsystem CS implementiert sein können (wie beispielsweise die Übermittlung von E-Mails), aufzurufen sind. Falls dies der Fall ist und demzufolge die Session noch nicht beendet ist, wird in dem Schritt 411 der nächste Transfer-Service aufgerufen, sonst wird der Ablauf beendet (Schritt 412).

Die Verarbeitung der BDocs in dem Zentralsystem CS erfolgt mittels der Flußsteuerung FC. Ein Launcher-Process arbeitet die Eingangsschlange IBQ ab und startet für jedes empfangene BDoc einen Flow. Für jeden BDoc-Typ ist in den Flußdefinitionen FD ein Graph definiert, durch den der Durchlauf der BDocs durch alle definierten Services kontrolliert wird. Dies geschieht vollkommen generisch. Die konkrete Bearbeitung hängt von den definierten Services ab, wobei die Services die BDocs nicht nur transportieren, sondern auch deren Inhalt ändern, beispielsweise zusätzliche Felder ergänzen oder vorhandene Feldinhalte entfernen können. Ein Beispiel ist das Hinzufügen system-übergreifender Schlüssel bei der semantischen Integration unterschiedlicher Datenbanksysteme, die in der europäischen Patentanmeldung 1093061 "Integriertes Datenbank-Verbundsystem" der gleichen Anmelderin beschrieben wird. Auf diese Anmeldung wird in dem Sinn Bezug genommen, daß ihr Inhalt in vollem Umfang zur Ergänzung des Inhalts der vorliegenden Anmeldung herangezogen werden soll.

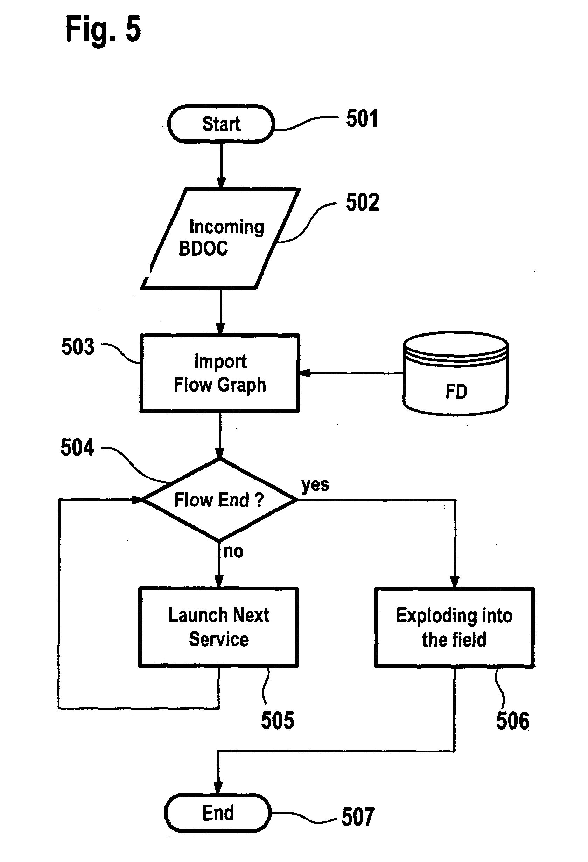

Die allgemeinen Merkmale der Flußsteuerung FC sind in Figur 5 dargestellt. Wenn nach dem Start 501 des Flusses in dem Schritt 502 ein BDoc an die Flußsteuerung zur Bearbeitung übergeben wird, erfolgt der weitere Fluß auf Basis eines Graphen, der in dem Schritt 503 von den abgespeicherten Flußdefinitionen FD importiert wird. Gemäß . diesem Graphen werden die erforderlichen Services der Flußdefinition abgearbeitet. Für gebräuchliche BDoc-Typen (z.B. Kunde, Auftrag) durchläuft der Fluß beispielsweise unter anderem folgende Services:
a) Einen Service R/3-S, um die Änderungsinformationen auch dem ERP-System des Unternehmens zugänglich zu machen (falls für dieses System relevant, anderenfalls ist der R/3-Service in dem Fluß des entsprechenden BDoc-Typs nicht definiert).
b) Einen Service CDS, um die Änderungsinformation in der konsolidierten Datenbank CD persistent zu machen. Hierzu löst der Datenbankservice CDS die BDocs in Tabellen auf und bearbeitet alle Datensätze aller zugehörigen Tabellen in einem Commit-Zyklus. Neuanlagen (Insert) werden per SQL-Statement in der Datenbank angelegt. Updates werden (ebenfalls mittels SQL Statement) netto eingearbeitet.
c) Einen Replikations-Service RPS, um die für die Änderungsinformation zuständigen Knotensysteme NS in eine Adressatenliste (Recipient List) einzutragen.

Die Abarbeitung sämtlicher in dem importierten Graphen definierten Services des Flow wird durch eine Schleife sichergestellt, die eine Abfrage 504 "Fluß beendet?" und einen Schritt 505 umfaßt, durch den im Falle einer negativen Antwort auf die Abfrage der nächste Service aufgerufen wird.

Wenn alle Services abgearbeitet sind, erfolgt in dem Schritt 506 (als abschließender Schritt jedes von der Flußsteuerung FC gesteuerten Flusses) die in Figur 5 als "Exploding into the field" bezeichnete Verteilung der Änderungsinformation an die Knotensysteme NS. Dabei ruft die Flußsteuerung mittels eines Remote Function Call die Adressaten anhand der Adressatenliste. Dies bewirkt im Normalfall (nämlich wenn gerade keine Online-Verbindung zu dem gerufen Knotensystem besteht) ein Queuen der Calls in den Outbound-Queues OBQ der einzelnen Knotensysteme. Falls eine Online-Verbindung besteht, kann der Aufruf unmittelbar weitergeleitet werden. Im Fehlerfall wird auf einen Fehlerbehandlungsservice verzweigt, um definierte Fehlerbehandlungsaktionen einzuleiten.

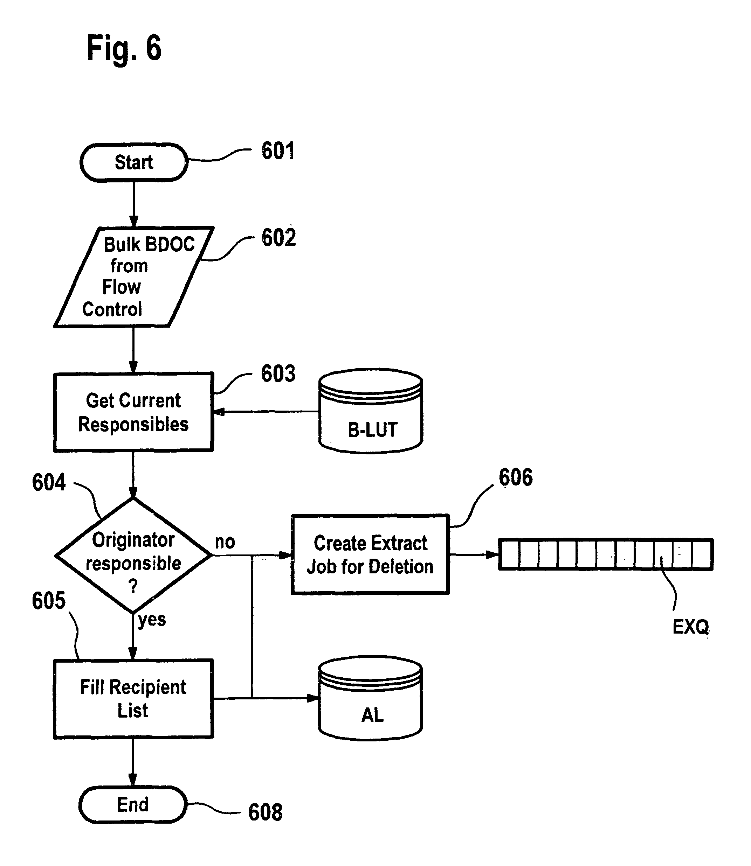

Nachfolgend werden anhand der Figuren 6 bis 15 wesentliche Besonderheiten im Zusammenhang mit der selektiven Übertragung der Änderungsinformationen von dem Zentralsystem CS an die Knotensysteme NS erläutert. Es wird der Ablauf von Programmodulen beschrieben, die gemäß bevorzugter Ausführungsformen der Erfindung verwendet werden, um sicherzustellen, daß die Änderungsinformationen auch bei ständigen dynamischen Änderungen der Daten in dem Datenbank-Netzwerksystem DBNS mit relativ geringem Rechenaufwand und guter Performance an die jeweils richtigen Adressaten unter den Knotensystemen verteilt werden. Zugleich soll das System sowohl hinsichtlich der Anpassung an die Bedürfnisse unterschiedlichster Benutzergruppen als auch hinsichtlich der späteren Anpassung bereits installierter Systeme an sich ändernde Anforderungen eine möglichst große Flexibilität gewährleisten.

Dabei spielen folgende Funktionen eine wesentliche Rolle:
- Replikation durch einen Replikations-Service RPS
- Realignment durch ein Realignment-Modul RA
- Extraktion durch einen Extrakt-Service EXT
- Subskriptions-Prüfung durch ein Subskriptionsprüfmodul SC.

Bei den in den Figuren 6, 7 und 8 dargestellten Programmablaufdiagrammen, die die Replikation anhand von drei unterschiedlichen Grundtypen beschreiben, wird davon ausgegangen, daß ein bestimmter BDoc-Typ zur Bearbeitung ansteht. Wie bereits erläutert, werden die BDoc-Typen, die in einem bestimmten Datenbank-Netzwerksystem DBNS verwendet werden, bei der Einrichtung des Systems im Rahmen des BDoc-Modelling definiert. Die Replikation mittels eines Replikations-Services RPS ist spezifisch für den BDoc-Typ, d.h. für jeden BDoc-Typ ist ein bestimmter Replikations-Service definiert, wobei selbstverständlich ein gleicher Replikations-Service für mehrere BDoc-Typen verwendet werden kann. Bei der Einrichtung des Datenbank-Netzwerksystems DBNS werden die erforderlichen Replikations-Services mittels einer generischen Engine und in einem Repository gespeicherter Steuerdaten generiert. Jeder Replikations-Service beginnt damit, daß die Flußsteuerung ein BDoc übergibt und den Service aufruft.

Zum besseren Verständnis wird in den nachfolgenden Erläuterungen beispielhaft auf ein CRM-System Bezug genommen, bei dem die Außendienstmitarbeiter jeweils für ein bestimmtes räumliches Vertriebsgebiet zuständig sind. In den Vertriebsgebieten sind jeweils bestimmte Kunden, die von den Außendienstmitarbeitern betreut werden, lokalisiert.

Wenn sich der Name eines Ansprechpartners bei einem Kunden ändert, muß die damit verbundene Änderungsinformation als Update an alle Außendienstmitarbeiter des jeweiligen Gebietes übermittelt werden. Dies geschieht im Rahmen der Replikation.

Bei manchen Änderungsinformationen genügt es jedoch nicht, sie nur gemäß der aktuellen LUT an die entsprechenden Adressaten weiterzuleiten. Vielmehr führt die Änderungsinformation in vielen Fällen dazu, daß auch die LUT geändert werden muß. Hierzu gehören alle Änderungsinformationen der Typen Insert und Delete, weil die Einfügung neuer Replikationsobjekt-Instanzen (beispielsweise eines neuen Kunden oder eines neuen Auftrags) jeweils zu einer entsprechenden Aktualisierung der Lookup-Tabelle (Einfügen der Adressaten für die neue Replikationsobjekt-Instanz, Löschen der Zuordnungen für die nicht mehr existierende Replikationsobjekt-Instanz) führen muß. Auch Updates können zu einer Anpassung der LUT führen. Ein Beispiel ist der Umzug eines Kunden aus einem Verkaufsgebiet A in ein Verkaufsgebiet B. Er führt zunächst zu einer Änderungen im Feld "Adresse" des BDoc "Kunde". Im Rahmen der Erfindung wird ein derartiges Update bei der Verteilung der Änderungsdaten an die Adressaten dadurch berücksichtigt, daß ein entsprechendes Datenfeld (beispielsweise ein Datenfeld, das die Postleitzahl der Kundenadresse enthält) als "verteilungskritisches Feld" definiert wird. Eine Änderung in einem solchen Feld kann - wie noch näher erläutert wird - zu einer Änderungen der LUT führen. Die Aktualisierung der LUT ist Teil der Realignment-Funktion.

Eine solche Adreßänderung hat zur Folge, daß die Daten des Kunden an alle Knotensysteme des Vertriebsgebiets B übermittelt und aus den Knotensystemen des bisherigen Vertriebsgebietes A gelöscht werden müssen. Dies bedeutet eine Änderung der LUT. Wenn also ein BDoc des Typs "Kunde" bearbeitet wird, dessen Adreßfeld eine Änderung enthält, muß zunächst festgestellt werden, ob diese Änderung eines verteilungskritischen Feldes tatsächlich zu einer Änderung der Verteilung führt. Im negativen Fall muß die Änderung allen Knotensystemen des bisherigen (unveränderten) Vertriebsgebietes A mitgeteilt werden. Im positiven Fall muß sie allen Knotensystemen des neuen Vertriebsgebietes B mitgeteilt werden, während gleichzeitig eine Löschung in den Knotensystemen des alten Vertriebsgebietes A erfolgt.

Zur Einarbeitung dieser Änderungen sind Insert- und Delete-Operationen erforderlich, die im Rahmen des Realignment veranlaßt werden. Vorzugsweise werden sie aber nicht sofort ausgeführt, sondern es wird ein Extract-Job generiert, der von dem Extractor-Modul EXT unabhängig und asynchron abgearbeitet wird. Das Extractor-Modul erzeugt BDocs, die zur Durchführung einer Insert- oder Delete-Operation an eine der an dem Datenbank-Netzwerksystem DBNS beteiligten Datenbanken übermittelt werden können.

Schließlich sind Systemänderungen zu berücksichtigen, die von dem Systemverwalter über die Administrationsstation AS vorgenommen werden. Dies gilt insbesondere für Umstrukturierungen des Datenbank-Netzwerksystems, die sich beispielsweise aus der Einfügung zusätzlicher Knotensysteme oder aus sonstigen Änderungen der für die Verteilung von Änderungsinformationen an die Adressaten gültigen Regeln (die zu einer Änderung der Subskriptionstabelle führen) ergeben. Derartige Änderungen werden mittels des Subskriptionsprüfmoduls SC in das System eingearbeitet.

Figur 6 zeigt den Programmablauf eines Replikations-Service-Typs, der als Bulk-Replikation bezeichnet wird. Er wird für BDocs verwendet, die abhängig von ihrem Typ (aber unabhängig von der jeweiligen BDoc-Instanz und ihrem Dateninhalt) an bestimmte Adressaten übertragen werden. Ein typisches Beispiel sind Stammdaten, die jedem Außendienstmitarbeiter eines Unternehmens zur Verfügung stehen müssen, beispielsweise über die Produkte des Unternehmens (BDoc-Typ "Produkt-Stammdaten").

Solche Bulk-BDocs können im Rahmen der Erfindung einfach und mit einem Minimum an Rechenzeit (also sehr schnell) verarbeitet werden. Ein typischer Algorithmus ist in Figur 6 dargestellt.

Nach dem Start 601 und der Übergabe des BDoc 602 durch die Flußsteuerung werden in dem Schritt 603 die aktuellen Adressaten (Current Responsibles) für den BDoc-Typ aus der LUT herausgelesen. Hierzu kann eine Filterfunktion der Datenbank-Software verwendet werden. Die LUT ordnet den Primärschlüsseln der BDoc-Typen jeweils die Schlüssel (Site-ID) sämtlicher Adressaten zu, die in der Subskriptionstabelle als Subskribenten dieses BDoc-Typs verzeichnet sind. Vorzugsweise wird für mehrere oder alle Bulk-Replikationen (also für mehrere oder alle BDoc-Typen, die im Wege der Bulk-Replikation an die Adressaten verteilt werden) eine gemeinsame LUT angelegt, die in Figur 6 mit B-LUT (Bulk LUT) bezeichnet ist.

Im nächsten Schritt 604 der Bulk-Replikation erfolgt eine Abfrage, ob der Absender des BDoc zu den Adressaten der darin enthaltenen Änderungsinformation gehört. Falls dies bejaht wird, wird in dem Schritt 605 im Kopf BDoc-H des BDoc die Adressatenliste eingetragen. Dies geschieht vorzugsweise physisch durch Verweis auf einen die Adressatenliste definierenden Datensatz in einer Adressenliste AL, die die Schlüssel (Site-ID) der Adressaten enthält.

Es besteht auch die Möglichkeit, daß der Autor einer Änderungsinformation (also das Knotensystem, in dem die in dem BDoc enthaltene Änderungsinformation erfaßt wurde) nicht zu deren Adressaten gehört und deswegen die Abfrage 604 zu einem negativen Ergebnis führt. Diese Möglichkeit hängt damit zusammen, daß das System eine Datenverflechtung erlauben soll. Beispielsweise kann es vorkommen, daß ein Außendienstmitarbeiter aus einem Verkaufsgebiet A vertretungsweise für einen Kollegen aus einem Verkaufsgebiet B Änderungen in das System eingibt und dazu seinen eigenen Laptop benutzt, der dem Verkaufsgebiet A zugeordnet ist.

In einem solchen Fall wird vor der Erstellung der Adressatenliste (Schritt 605) in dem Schritt 606 ein Extract-Job in eine Extractor-Queue eingestellt, der zum Löschen der entsprechenden Empfängerinformation führt, wie weiter unten noch näher erläutert wird. Dies ist nötig, um zu verhindern, daß der geänderte Datensatz in dem zu dem Verkaufsgebiet A gehörenden Knotensystem erhalten bleibt, obwohl er dort nicht nur unnötig ist, sondern - weil er nicht gepflegt wird - rasch veraltet und zu Dateninkonsistenzen führt.

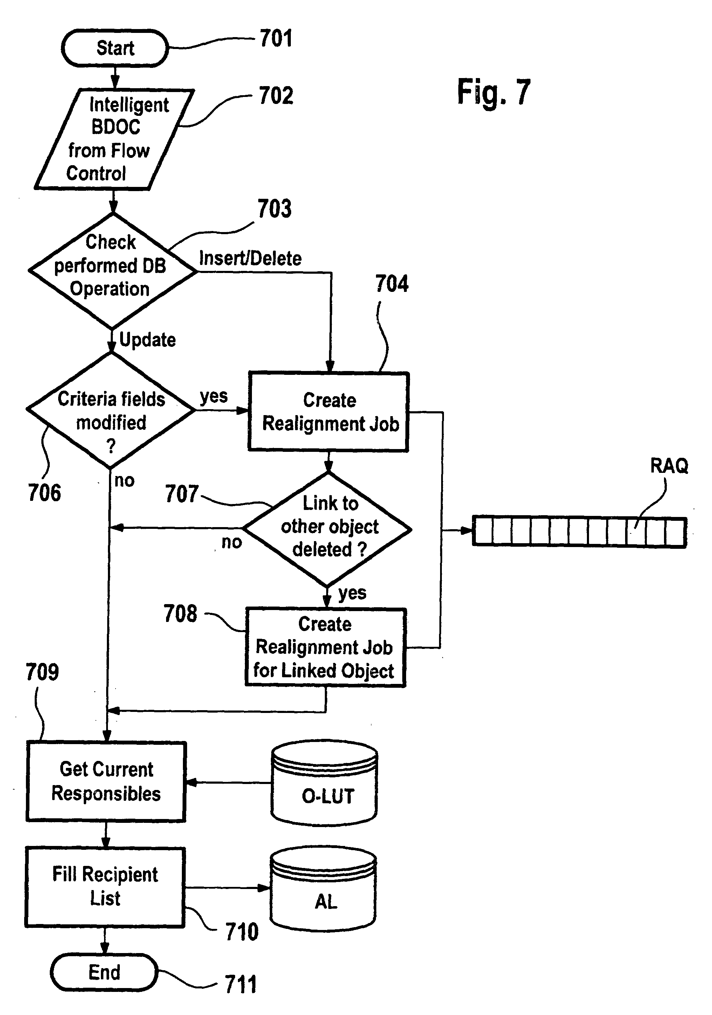

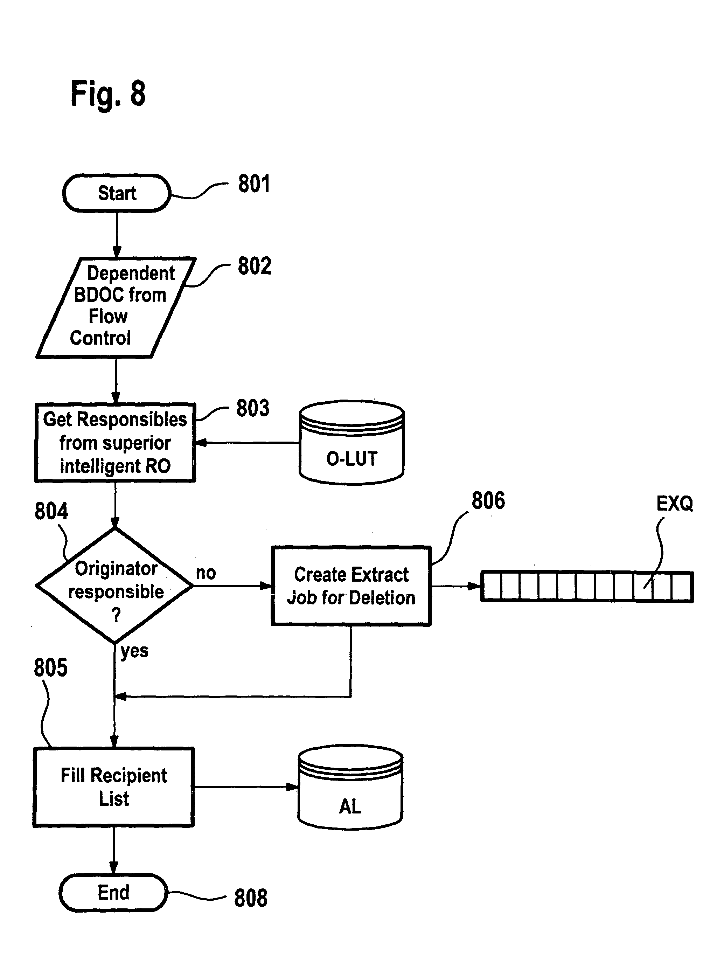

Die in Figur 7 dargestellte intelligente Replikation und die in Figur 8 dargestellte abhängige Replikation lassen sich unter dem Oberbegriff "objektweise Replikation" zusammenfassen. Damit werden Fälle bezeichnet, bei denen die Verteilung an die Adressaten nicht nur von dem BDoc-Typ, sondern von der einzelnen BDoc-Instanz, also dem jeweiligen Datenobjekt, abhängig ist. Dabei lassen sich folgende Fälle unterscheiden:
- Der Inhalt eines verteilungskritischen Feldes kann dazu führen, daß die LUT für dieses BDoc und möglicherweise auch für mit diesem verknüpfte BDocs geändert werden muß. Dies geschieht durch eine "intelligente Replikation", bei der ein Realignment Job generiert wird.
- Die Replikation muß zwar auf der Ebene der BDoc-Instanz (objektweise) erfolgen, jedoch in Abhängigkeit von einem übergeordneten Objekt. Eine solche Abhängigkeit der Replikationsobjekte entspricht in der Regel einer entsprechenden Abhängigkeit von Tabellen der an dem Datenbank-Netzwerksystem beteiligten Datenbanken. Ein typisches Beispiel sind Aufträge, die immer mit einem Kunden verknüpft sind (es gibt nur Aufträge eines Kunden). Deswegen müssen alle Aufträge eines Kunden genau so an die Adressaten verteilt werden, wie die Kundendaten selbst. Der BDoc-Typ "Auftrag" wird jedoch für viele Aufträge unterschiedlicher Kunden verwendet. Jede Instanz dieses Typs enthält ein Feld zur Identifikation (GUID) des Kunden, das anzeigt, zu welchem übergeordneten Replikationsobjekt eine Abhängigkeit besteht und das für die Verteilung an die Adressaten benutzt wird.

Ein Algorithmus für die intelligente Replikation ist in Figur 7 dargestellt. Nach dem Start 701 des Service und der Übergabe des BDoc (Feld 702) erfolgt eine Abfrage des (in einem Feld des BDoc definierten) Typs der Datenbankoperation.

Falls es sich um ein Insert oder Delete handelt, wird in dem Schritt 704 ein Realignment-Job generiert. Dies bedeutet nicht, daß sofort ein Realignment durchgeführt wird. Vielmehr wird nur ein Befehl erzeugt, der in eine Realignment Queue RAQ eingestellt und asynchron zu einem beliebigen Zeitpunkt verarbeitet wird.

Falls die in dem BDoc codierte Datenbankoperation ein Update ist, erfolgt eine Abfrage 706, ob ein verteilungskritisches Feld geändert wurde. Im positiven Fall wird wiederum in dem Schritt 704 ein Realignment-Job generiert.

Im Anschluß an die Erzeugung eines Realignment-Jobs erfolgt stets eine Abfrage 707, ob in dem BDoc ein Link zu anderen BDocs (Replikationsobjekten) existiert. Im positiven Fall wird in dem Schritt 708 auch für das verknüpfte Objekt ein Realignment-Job generiert. Dies bezieht sich beispielsweise auf Fälle, bei denen der Kunde seinen Sitz in einem Vertriebsgebiet A hat, jedoch einem Konzern angehört, dessen Hauptquartier in einem Vertriebsgebiet B liegt. Diese Information wird durch einen Link in dem entsprechenden BDoc des Kunden codiert und in dem Schritt 708 verwendet, um sicherzustellen, daß nicht nur die Außendienstmitarbeiter in dem Gebiet A, sondern auch die Außendienstmitarbeiter in dem Gebiet B Änderungsinformationen erhalten, die wegen des Sitzes der Muttergesellschaft für sie wichtig sind.

In jedem Fall wird der Algorithmus in gleicher Weise wie bei Figur 6 dadurch fortgesetzt, daß aus der LUT die aktuell gültigen Adressaten (ohne Berücksichtigung der Änderungen, die aus der Bearbeitung des aktuellen BDoc möglicherweise resultieren) herausgelesen und auf dieser Basis in dem Schritt 710 die Adressatenliste im Kopf des BDoc erstellt wird.

Die Adressatenliste enthält in manchen Fällen keine Einträge. Wenn sich beispielsweise die in dem BDoc, das den in Fig. 7 dargestellten Algorithmus durchläuft, codierten Daten auf einen neuen Kunden beziehen (allgemein bei jedem Insert) enthält die O-LUT für das neue Replikationsobjekt keine Einträge. Die Verteilung an die für den neuen Kunden zuständigen Knotensysteme erfolgt erst im Rahmen des Realignment.

Da die intelligente Replikation auf der Ebene der BDoc-Instanzen stattfindet, also für jede Instanz Zuordnungen aller Adressaten in der LUT vorhanden sein müssen, ergeben sich (beispielsweise für eine große Zahl von Kunden eines Versandhauses) sehr umfangreiche LUTs. Vorzugsweise werden die Adressaten-Zuordnungen der Instanzen eines BDoc-Typs zu einer gemeinsamen LUT zusammengefaßt, die als O-LUT (Objekt-LUT) bezeichnet wird.

Besonders bevorzugt ist in dem Zentralsystem CS eine B-LUT (Adress-Zuordnungen der per Bulk-Replikation verteilten BDoc-Typen) und eine Vielzahl von O-LUTs vorhanden, die jeweils für jede einzelne Instanz eines mittels intelligenter Replikation verteilten BDoc-Typs die Zuordnungen der Adressaten (Site-IDs) enthält.

Der Schritt 711 markiert das Ende des Service (Übergabe des BDoc an die Flußsteuerung FC).

Figur 8 zeigt den als "Dependent Replication" bezeichneten Ablauf eines Service zur Replikation eines BDocs, dessen Weiterleitung an die Adressaten von einem übergeordneten BDoc (in Figur 8 als RO = Replication Object bezeichnet) abhängig ist. In diesem Fall werden nach dem Start 801 des Services und der Übernahme des BDoc (Schritt 802) in dem Schritt 803 aus einer Lookup-Tabelle die Adressaten des übergeordneten BDoc (also z.B. des Kunden, für den ein Auftrag durchgeführt wird) aus der LUT abgefragt. Die weiteren Schritte 804 bis 808 entsprechen den Schritten 604 bis 608 der Bulk-Replikation (Figur 6).

Es wird deutlich, daß die abhängige Replikation ein einfacher Algorithmus ist, der sehr schnell ausgeführt werden kann. Dies ist für die Performance des Gesamtsystems von erheblicher Bedeutung, weil in der Praxis die Anzahl abhängiger Replikationsobjekte in der Regel sehr groß ist.

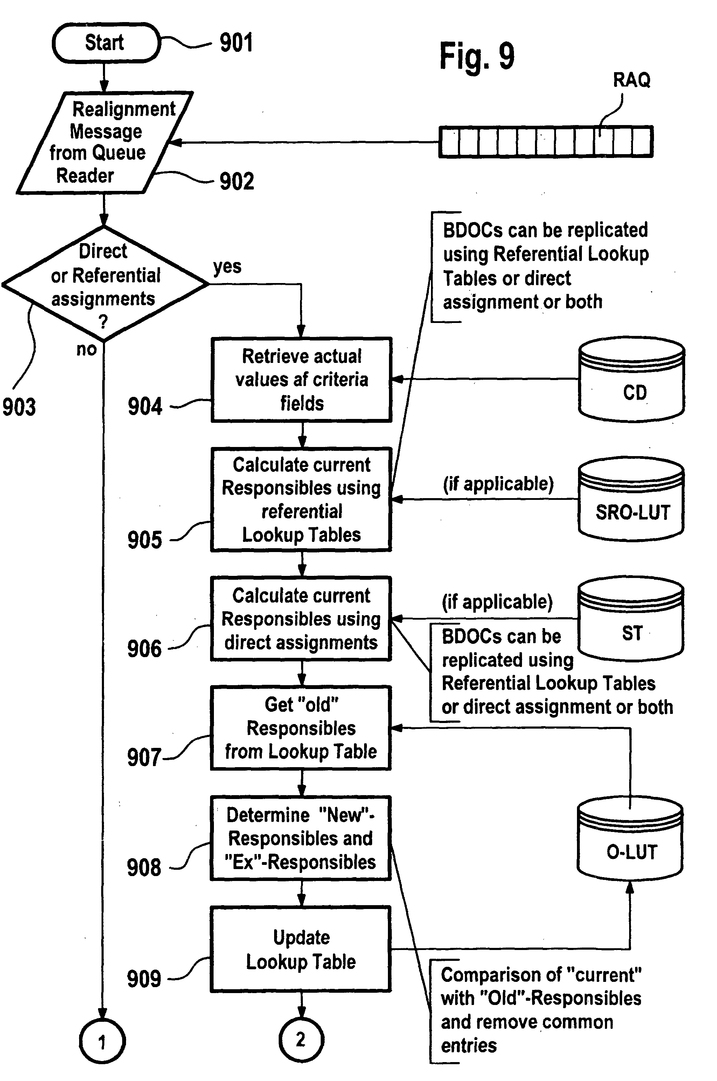

Die Figuren 9 bis 12 dienen zur Erläuterung der Funktionen, die von einem Realignment-Modul RA ausgeführt werden. Sie gliedern sich in zwei Teilaufgaben, nämlich:
- Die Aktualisierung der LUTs auf Basis von Datenänderungen in einer der lokalen Datenbanken LD oder in der konsolidierten Datenbank CD und
- die Veranlassung der aufgrund solcher Änderungen notwendigen Insert- und Delete-Operationen.

Das Realignment wird asynchron zu einem beliebigen Zeitpunkt, der normalerweise von dem Systemverwalter festgelegt wird, im Batch-Verfahren durchgeführt. Da das Realignment-Modul nicht von der Flußsteuerung FC kontrolliert wird, wird es nicht als Service bezeichnet. Die asynchrone, von der Replikation unabhängige Durchführung des Realignment ist von großer Bedeutung im Hinblick auf die gleichmäßige Auslastung des Gesamtsystems (Load Balancing). Wenn beispielsweise das Realignment nachts durchgeführt wird, wird die Hauptnutzungszeit des Systems entlastet und dadurch die Performance verbessert.

Die in der Realignment Queue stehenden Realignment-Jobs enthalten vorzugsweise nur den Primärschlüssel des jeweiligen BDocs (der die BDoc-Instanz, beispielsweise einen bestimmten Kunden, eindeutig identifiziert) und die Identifikation des BDoc-Typs. Der Dateninhalt des BDocs wird bei Bedarf aufgrund des Primärschlüssels aus der konsolidierten Datenbank CD abgefragt. Der Typ des BDocs ist bestimmend für die Art der Zuordnung (Assignment) der Daten zu den Knoten.

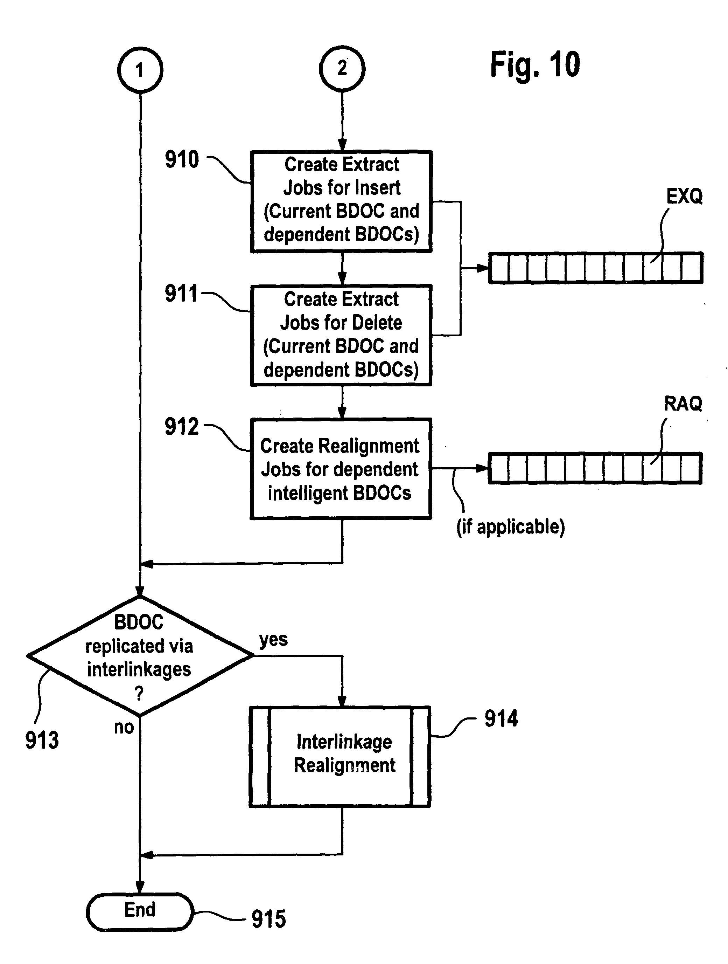

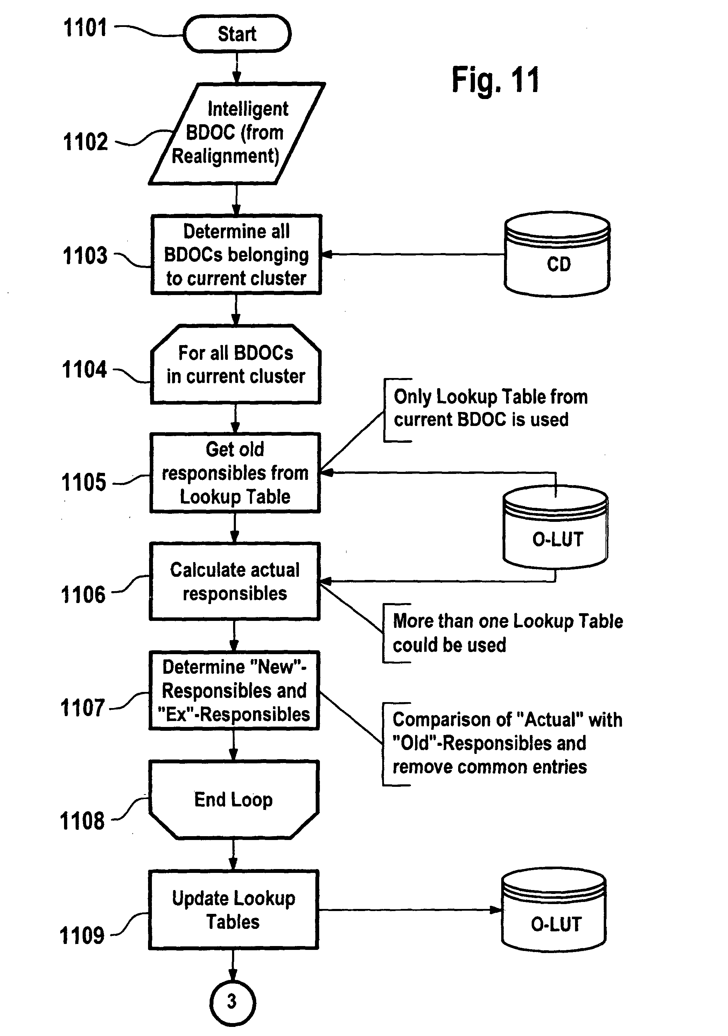

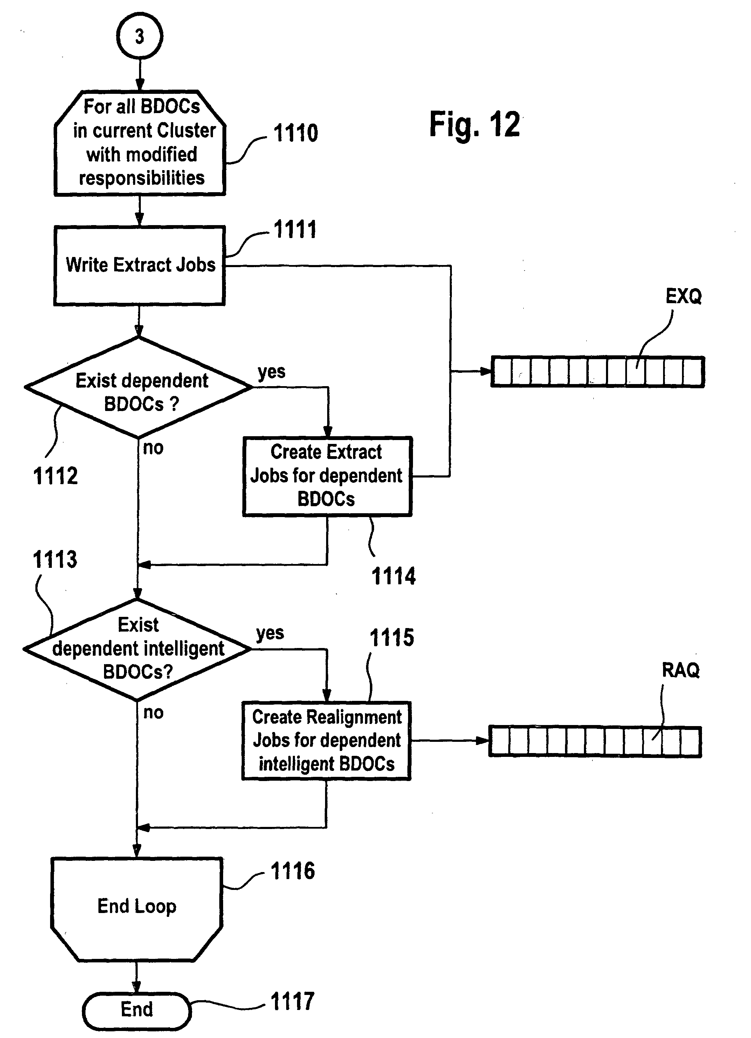

Die Figuren 9 und 10 zeigen den Programmablauf eines Realignment-Algorithmus mit Ausnahme der Funktion "Interlinkage", die anschließend anhand der Figuren 11 und 12 erläutert wird.

Nach dem Start 901 werden in einem Schritt 902 die in der Realignment Queue RAQ stehenden Jobs sequentiell von einem Queue-Leser übernommen. Durch die sequentielle Bearbeitung wird sichergestellt, daß die Reihenfolge die gleiche ist, in der die Änderungsinformationen, die den Realignment-Jobs zugrundeliegen, in dem Zentralsystem CS verarbeitet worden sind.

Anschließend erfolgt in dem Schritt 903 eine Abfrage hinsichtlich des Typs des Assignments, also der Art Zuordnung zwischen dem BDoc in der Realignment Queue RAQ und den Knotensystemen NS. Diese Zuordnung ist von dem Typ des BDocs abhängig. In dem Repository ist hinterlegt, welcher Typ des Assignments für die einzelnen BDoc-Typen zu verwenden ist. Es sind folgende Möglichkeiten zu unterscheiden:
a) Direct Assignment.
   Diese Zuordnung wird für Fälle benutzt, bei denen die Adressaten unmittelbar vom Dateninhalt eines Feldes des BDoc abhängig sind. Zur Ermittlung der Adressaten wird beispielsweise das Feld Verkaufsgebiet ("Area") abgefragt und nach dessen Inhalt werden aufgrund der im Repository des CS abgelegten Subskriptionstabelle ST die Adressaten festgelegt.
b) Referential Assignment.
   Diese Art der Zuordnung wird in Fällen verwendet, bei denen die Adressaten primär aus einer bereits existierenden LUT eines übergeordneten Replikationsobjektes abgelesen werden können, aber zusätzlich eine intelligente Abfrage auf Basis eines Dateninhaltes erforderlich ist. Ein Beispiel sind Aufträge, die im wesentlichen (wie weiter oben erläutert) in Abhängigkeit von den Kunden, für die sie ausgeführt werden, an die Adressaten, die die jeweiligen Kunden betreuen, verteilt werden. Wenn keine zusätzlichen Verteilungskriterien berücksichtigt werden müssen, erfolgt diese Verteilung als abhängige Replikation gemäß Figur 8. In diesen Fällen ist kein Realignment erforderlich und es steht kein Realignment-Job in der Realignment Queue an.
   Es gibt aber Fälle, bei denen zusätzliche Kriterien bei der Verteilung an die Adressaten berücksichtigt werden müssen. Dies gilt beispielsweise für Netzwerke, bei denen die Knotensysteme NS von Architekten benutzt werden. Dabei kommt es häufig vor, daß ein Architekt ein bestimmtes Bauwerk (Auftrag) betreut, obwohl er nicht im Gebiet des Kunden (Bauherr) ansässig und deswegen nicht für diesen zuständig ist. In diesem Fall müssen die Daten über das Bauwerk nicht nur - als abhängige Replikation - an die im Vertriebsgebiet des Kunden lokalisierten Knotensysteme, sondern (aufgrund einer intelligenten Abfrage eines bestimmten Feldes) auch an den für dieses Bauwerk zuständigen Architekten verteilt werden.
c) Interlinkage.
   Dieser Typ der Zuordnung wird im Zusammenhang mit den Figuren 11 und 12 erläutert.

Im Falle eines direkten oder referentiellen Assignments verzweigt der Programmablauf zu den Schritten 904 bis 912, die nacheinander (teilweise optional) ausgeführt werden.

In dem Schritt 904 werden die Inhalte der verteilkritischen Felder des BDoc aus der konsolidierten Datenbank CD übernommen. Die folgenden Schritte 905 und 906 sind optional in dem Sinn, daß abhängig von der Art der Zuordnung und dem verarbeiteten BDoc mindestens einer der Schritte durchgeführt wird, wobei der Schritt 905 auch mehrfach durchgeführt werden kann.

In dem Schritt 905 werden die neuen Adressaten (Current Responsibles) aus LUTs übergeordneter Replikationsobjekte SRO-LUT (Lookup Table of Superior Replication Object) abgefragt. Dies kann mehrfach erforderlich sein, wenn das bearbeitete BDoc Links zu mehreren übergeordneten Objekten enthält (beispielsweise ein Auftrag, der für mehrere Kunden durchgeführt wird, z.B. ein Bauwerk für eine Bauherrengemeinschaft).

In dem Schritt 906 werden aufgrund direkter Zuordnung die neuen Adressaten berechnet. Dies geschieht durch Vergleich verteilungskritischer Felder des BDoc mit einer Subskriptionstabelle ST, die im Repository abgelegt ist. Im Falle eines Referential Assignment können beide Schritte 905 und 906 erforderlich sein. Im Falle eines BDoc mit direktem Assignment wird nur der Schritt 906 ausgeführt.

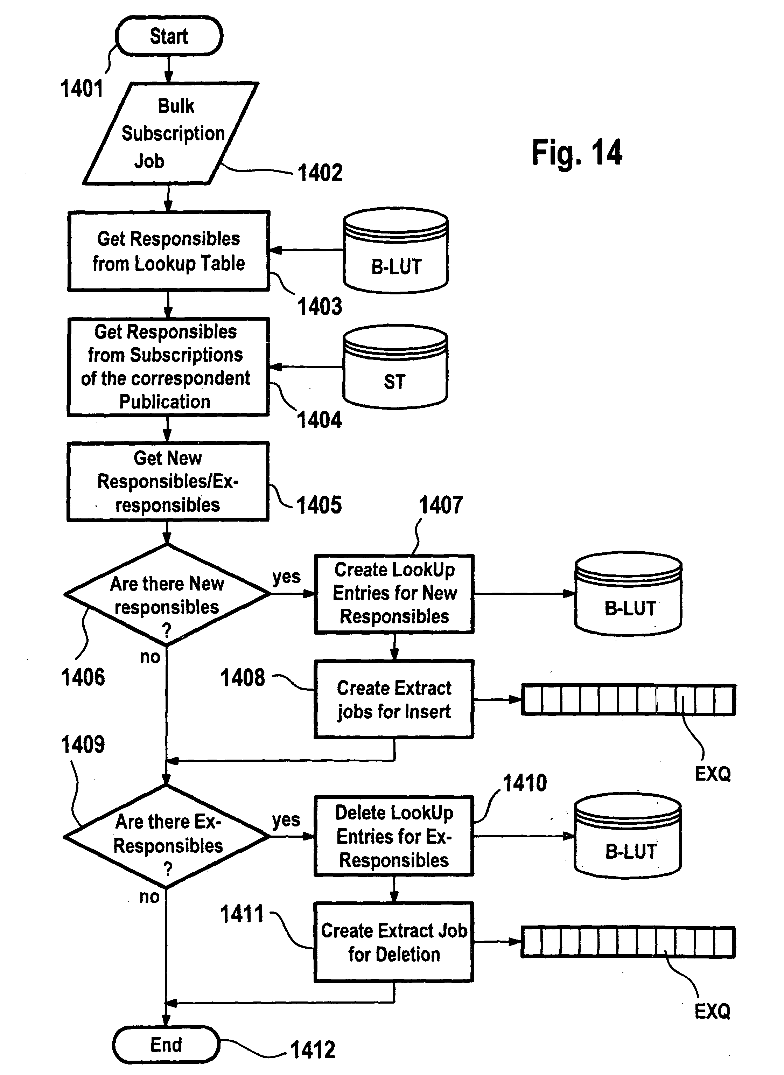

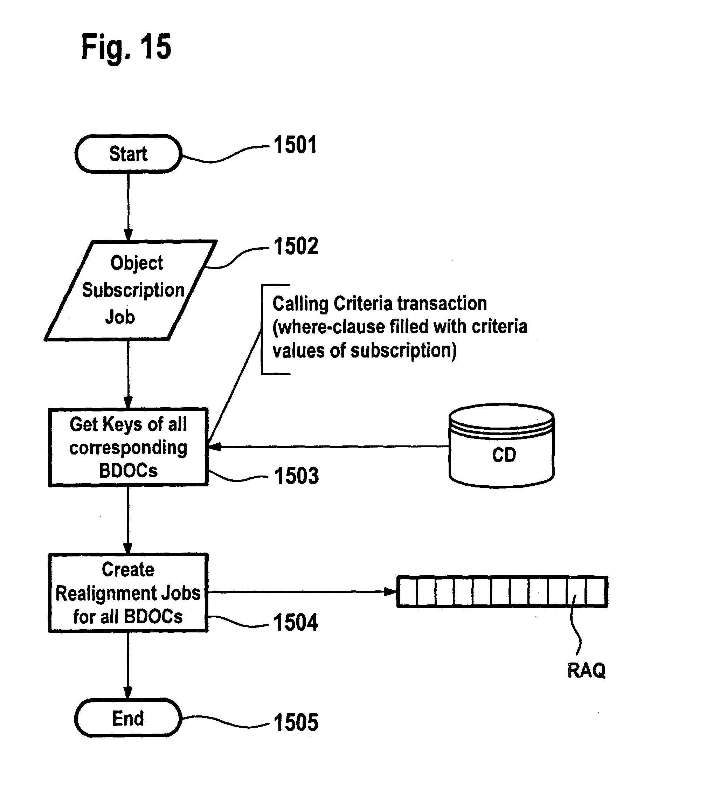

Die Subskriptionstabellen ST werden ihrerseits häufig geändert, sind also hochgradig dynamisch. Wenn beispielsweise ein neuer Außendienstmitarbeiter in einem Verkaufsgebiet A eingesetzt wird, führt der Systemverwalter eine Änderung dahingehend durch, daß der Außendienstmitarbeiter XY als neuer Subskribent für die das Verkaufsgebiet A betreffenden Änderungen eingefügt wird. Die daraus resultierenden Änderungen der Subskriptionstabelle ST werden durch die Subskriptionsprüfung (Figuren 14 und 15) bearbeitet.

Die Schritte 907 bis 909 dienen dazu, die erforderliche Aktualisierung der Lookup-Tabelle des bearbeiteten BDocs durchzuführen. Soweit die Adressaten der Änderungsinformation unverändert bleiben, ist keine Änderung der LUT erforderlich. Deswegen werden zunächst in dem Schritt 907 die "alten" Adressaten aus der LUT ausgelesen und in dem Schritt 908 wird ein Vergleich zwischen den aktuellen und den alten Adressaten durchgeführt, um zusätzliche ("neue") Adressaten und nicht mehr aktuelle ("Ex")Adressaten zu bestimmen.

Auf dieser Basis werden in dem Schritt 909 die für die Aktualisierung der LUT erforderlichen Änderungen festgelegt. Das Update ist zu diesem Zeitpunkt aber noch nicht aktiv, d.h. die Änderungen werden noch nicht durchgeführt, sondern lediglich (durch Setzen eines Flag) markiert. Dies ist von erheblicher praktischer Bedeutung, insbesondere weil verhindert werden muß, daß in die Outbound Queue OBQ Änderungen für ein bestimmtes Knotensystem eingestellt werden, obwohl es die Grunddatenbefüllung des betreffenden Replikationsobjektes (Insert) noch nicht hat. Bezogen auf das diskutierte Beispiel muß also verhindert werden, daß eine Änderung eines Ansprechpartners eines Kunden bereits zur Übermittlung an einen bestimmten Laptop bereitgestellt wird, bevor dieser Laptop die Kundendaten selbst enthält.

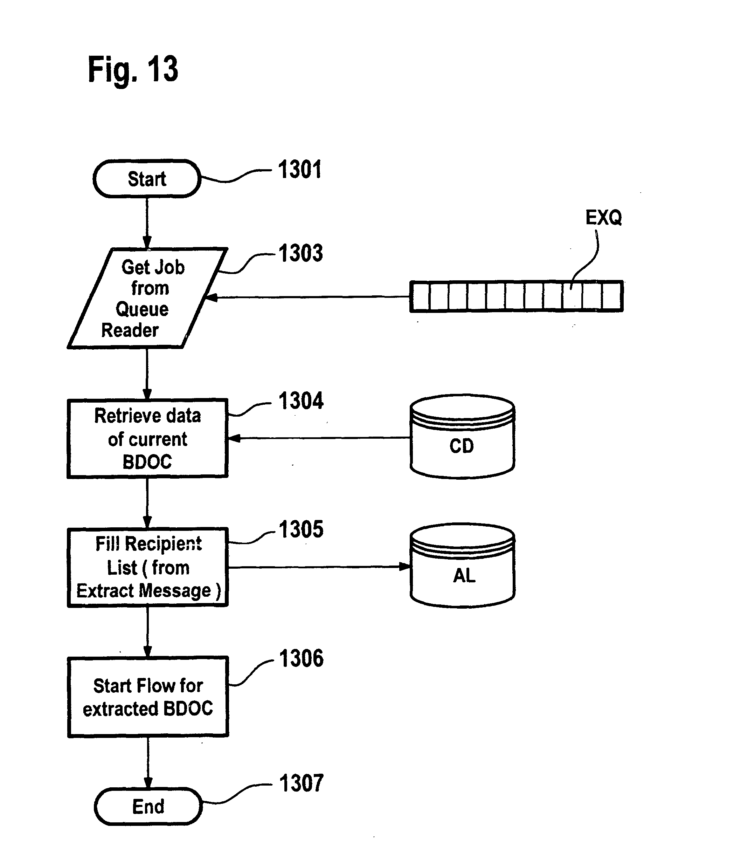

Die in Figur 10 dargestellten Schritte 910 und 911 dienen dazu, die erforderlichen Insert-Operationen bei den neuen Adressaten und Delete-Operationen bei den Ex-Adressaten zu veranlassen. Hierzu werden die erforderlichen Extract-Jobs (vgl. Figur 13) generiert und in die Extractor Queue EXQ eingestellt. Dies bezieht sich jeweils auf das gerade bearbeitete BDoc und eventuell hiervon abhängige BDocs.

Die Erzeugung von Extract-Jobs auch für BDocs, die von dem gerade bearbeiteten BDoc abhängig sind, ist notwendig, um sicher zu stellen, daß bei der Erstdatenbefüllung eines Knotensystems NS alle erforderlichen Informationen übermittelt werden. Wenn z.B. die Daten eines neuen Kunden an die zuständigen Außendienstmitarbeiter übermittelt werden, müssen die neuen Adressaten nicht nur dessen Daten, sondern auch weitere Daten (beispielsweise über Ansprechpartner, Aufträge für den Kunden und dergleichen) erhalten.

Durch die Insert-Operationen erhalten alle neuen Adressaten den gesamten Datensatz der gerade bearbeiteten BDoc-Instanz. Bei den Ex-Adressaten werden alle Daten dieser BDoc-Instanz gelöscht. Damit ist die Voraussetzung geschaffen, daß künftige Datenänderungen dieses Replikationsobjektes auch an die neuen Adressaten übermittelt werden können bzw. es muß vermieden werden, daß sie an die Ex-Adressaten übermittelt werden. Deswegen werden die neuen Adressaten und die Ex-Adressaten nun in die O-LUT übernommen, d.h. die zuvor noch nicht durchgeführte Aktualisierung der O-LUT wird aktiviert. Dies geschieht vorzugsweise in dem gleichen Commit-Zyklus mit der Erzeugung der Extract-Jobs.

Schließlich werden in dem Schritt 912 im Falle von BDocs, die nach eigenen Regeln und zusätzlich abhängig von übergeordneten Replikationsobjekten verteilt werden ("abhängige intelligente BDocs") Folgeaufträge generiert und in die Realignment Queue eingestellt. Ein Beispiel sind Fälle der erläuterten referentiellen Zuordnung. Wenn beispielsweise das gerade bearbeitete BDoc ein Auftrag ist, der im Falle des beschriebenen Architektensystems einen Link zu einem Architekten enthält, wird für diesen ein zusätzlicher Realignment-Job generiert.

In einer weiteren Abfrage 913 wird festgestellt, ob das bearbeitete BDoc zusätzlich über Interlinkage repliziert werden muß. Im positiven Fall findet in dem Schritt 914 ein Interlinkage Realignment statt, das anhand der Figuren 11 und 12 näher erläutert wird. Nach Abschluß des Interlinkage Realignment oder bei einer negativen Antwort auf die vorausgehende Abfrage wird der Service beendet (915).

Mit der abhängigen Replikation gemäß Figur 8 können nur 1:N-Beziehungen, wie beispielsweise zwischen einem Kunden und den für diesen bearbeiteten Aufträgen verarbeitet werden. In der Praxis sind jedoch auch Fälle von N:N-Beziehungen häufig. Wenn beispielsweise bei dem oben erwähnten Architektensystem ein Architekt für ein Bauwerk eines "gebietsfremden" Kunden zuständig ist, der außerhalb seines Tätigkeitsgebietes seinen Sitz hat, erhält er im Wege des Referential Assignment zwar die Daten des Bauwerks (Auftrag), nicht jedoch die des Kunden. Die Kundendaten erhält er mittels eines in dem BDoc "Auftrag" vorgesehenen Links zu dem Kunden. Dies ist ein Interlinkage zwischen unterschiedlichen BDoc-Typen (Auftrag-Kunde). Häufig sind aber auch Links zwischen unterschiedlichen Instanzen des gleichen BDoc-Typs vorhanden, so beispielsweise um Beziehungen zwischen verschiedenen Kunden, die sich auf die Verteilung von Änderungsinformationen auswirken, zu berücksichtigen.

Derartige Aufgaben werden durch das als Interlinkage bezeichnete Programmodul gelöst. Voraussetzung ist, daß bei der Einrichtung des Systems oder zu einem späteren Zeitpunkt entsprechende Links definiert wurden. Die Definition von Links kann auch von der Anwendungssoftware AS der Knotensysteme NS erzeugt werden, beispielsweise wenn ein Außendienstmitarbeiter eine im System bis jetzt noch nicht berücksichtigte Beziehung zwischen Kunden feststellt. Auch solche Änderungsinformationen werden in BDocs codiert, in das Zentralsystem CS transportiert und dort rekursiv durchgearbeitet, um entsprechende Links zu generieren.

Alle Verknüpfungen zwischen BDocs (des gleichen Typs oder unterschiedlicher Typen) sind vorzugsweise in der consolidierten Datenbank CS als sogenannte Interlinkage-Tabelle gespeichert. In dieser Tabelle werden die Schlüssel (GUIDs) aller miteinander verknüpften Replikationsobjekte (vorzugsweise paarweise in einer zweispaltigen Tabelle) einander zugeordnet. Die BDocs enthalten die Information über von ihnen ausgehende Verknüpfungen vorzugsweise durch Verweis auf eine solche Interlinkage-Tabelle.

Dies setzt voraus, daß die zur Identifikation der BDocs verwendeten Schlüssel im Gesamtsystem eindeutig sind, also kein Schlüssel in dem gesamten Datenbank-Netzwerksystem (DBNS) mehrfach zur Bezeichnung unterschiedlicher Replikationsobjekt-Instanzen verwendet wird. Diese Voraussetzung ist bei GUIDs selbstverständlich erfüllt.

Die Figuren 11 und 12 erläutern die in Figur 10 als Feld 914 zusammengefaßten Schritte. Nach dem Start 1101 des Programmoduls und der Übernahme des BDoc (Schritt 1102), werden zunächst in dem Schritt 1103 alle BDocs zu einem "Cluster" zusammengefaßt, die durch Links (d.h. Pointer in der konsolidierten Datenbank CD) miteinander verbunden sind. Konkret wird eine Liste der Primärschlüssel aller BDoc-Instanzen erstellt, die miteinander durch Links verknüpft sind. Sie können unterschiedlichen BDoc-Typen angehören und werden gemeinsam in dem nachfolgenden Algorithmus bearbeitet. Dies ist dadurch möglich, daß typübergreifend eindeutige Schlüssel (beispielsweise GUIDs) verwendet werden. Diese gemeinsame Verarbeitung ist wichtig für die Performance des Systems. Durch die Verarbeitung der BDocs mit typübergreifenden Algorithmen kann die Bearbeitungszeit wesentlich verkürzt werden.

Soweit vorstehend davon die Rede ist, daß "alle" Verknüpfungen durch Links zu einem Cluster zusammengefaßt werden, gilt dies selbstverständlich nur, soweit dem keine Beschränkungen hinsichtlich der Verteilung von Daten (beispielsweise wegen deren Vertraulichkeit) entgegenstehen.

Für alle BDocs eines Clusters läuft die in Figur 11 dargestellte, aus den Schritten 1104 bis 1108 bestehende for-Schleife ab. Dabei werden ähnlich wie bei den Schritten 907 und 908 von Figur 9 die aktuellen Adressaten bestimmt und mit den alten Adressaten verglichen, um hinzugekommene (neue) und nicht mehr aktuelle (Ex)Adressaten zu bestimmen. Die Bestimmung der aktuellen Adressaten erfordert dabei keinen Rückgriff auf die Subskriptionstabelle, sondern kann unmittelbar aus der LUT des BDoc entnommen werden, weil in diesem Algorithmus keine Berechnung von Adressaten mittels Assignment erforderlich ist.

Die nachfolgende Aktualisierung der LUTs in dem Schritt 1109 erfolgt analog wie bei Figur 9. Wichtig für die Performance ist, daß dieser Schritt für alle BDocs des Clusters gemeinsam nach vollständiger Abarbeitung der vorausgegangenen Schleife erfolgt.

Auch die in Figur 12 dargestellten Schritte zur Veranlassung der erforderlichen Insert- und Delete-Operationen erfolgen analog Figur 10, allerdings in einer weiteren, aus den Schritten 1110 bis 1116 bestehenden for-Schleife, in der nacheinander alle BDocs des Clusters abgearbeitet werden, für die aus der vorhergehenden Schleife modifizierte Adressaten resultieren.

Da das Realignment ein Rechenzeit-aufwendiger Vorgang ist, kann eine Parallelbearbeitung der in der Realignment Queue RAQ anstehenden Jobs zweckmäßig sein. Dies ist zulässig, wobei jedoch darauf geachtet werden muß, daß die Bearbeitung der Realignment-Jobs für eine BDoc-Instanz in der gleichen Reihenfolge erfolgt, in der die Realignment-Jobs (im Rahmen der Replikation) erzeugt worden sind. Mit anderen Worten müssen die Realignment-Jobs einer Replikationsobjekt-Instanz stets in der Reihenfolge abgearbeitet werden, in der sie erzeugt worden sind. Dies läßt sich im Falle einer Parallelisierung beispielsweise dadurch gewährleisten, daß alle Realignment-Jobs einer BDoc-Instanz stets in die gleiche Realignment Queue eingestellt und damit zwingend nacheinander prozessiert werden.

Wie erläutert dient das Realignment-Modul RA nicht nur zur Aktualisierung der LUTs, sondern auch dazu, die infolge von LUT-Änderungen notwendigen Insert- und Delete-Operationen zu veranlassen. Zur Ausführung dieser Änderungsoperationen wird ein Extract-Job generiert, der von dem Extractor-Modul EXT unabhängig und asynchron abgearbeitet wird. Das Extractor-Modul wird auch in anderem Zusammenhang verwendet, um BDocs zu erzeugen, die zur Durchführung einer Insert- oder Delete-Operation in einer der beteiligten Datenbanken dienen.

Das in Figur 13 dargestellte Ablaufschema verdeutlicht einen für das Extractor-Modul geeigneten Algorithmus. Nach dem Start 1301 des Moduls wird in dem Schritt 1302 ein Job aus der Extractor-Queue EXQ mittels eines Queue-Readers, der die sequentielle Abarbeitung sicherstellt, übernommen. Der Extractor-Job enthält den Primärschlüssel des BDocs, auf das er sich bezieht und die Adressen (Site-IDs) von einem oder mehreren Knotensystemen, in denen die Insert- oder Delete-Operation durchgeführt werden sollen. In dem Schritt 1304 werden, sofern es sich um eine Insert-Operation handelt, die Daten des BDoc aus der konsolidierten Datenbank CD ausgelesen. Anschließend werden in dem Schritt 1305 die Adressen der Adressaten in den BDoc-Kopf BDoc-H (wiederum durch Verweis auf eine Adressenliste AL) eingetragen. Schließlich wird in dem Schritt 1306 das extrahierte BDoc an die Flußsteuerung FC übergeben und der Fluß gestartet. Der Schritt 1307 markiert das Ende des Moduls.

Änderungen der LUT und auf Basis solcher Änderungen notwendige Insert- und Delete-Operationen können nicht nur aus von den Knotensystemen NS übermittelten Änderungsinformationen resultieren. Vielmehr führen, wie bereits beschrieben, Änderungen, die von dem Systemverwalter über die Administrationsstation AS vorgenommen werden, in vielen Fällen zu einer Änderung der Informationsverteilung innerhalb des Datenbanksystems. Insbesondere werden häufig Änderungen der Subskriptionstabelle ST erforderlich, beispielsweise wenn neue Außendienstmitarbeiter eingestellt werden und deren Laptops als Knotensysteme in das Datenbank-Netzwerksystem DBNS eingebunden werden sollen oder wenn sich Änderungen hinsichtlich der Zuordnung der Knotensysteme NS zu den Vertriebsgebieten ergeben (beispielsweise einer oder mehrere der Außendienstmitarbeiter in ein anderes Vertriebsgebiet wechseln).

Derartige Änderungen werden mittels eines Programmoduls in das System eingearbeitet, das als Subskriptionsprüfmodul SC (Subscription Checker) bezeichnet wird. In den Figuren 14 und 15 sind Ablaufdiagramme von Algorithmen für zwei Typen von Subskriptionsprüfmodulen SC dargestellt, die abhängig von dem Typ des BDocs verwendet werden. Das in Fig. 14 dargestellte Bulk-Subskriptionsprüfmodul wird für die BDoc-Typen verwendet, die mit der Bulk-Replikation gemäß Fig. 6 repliziert werden, während das in Fig. 15 dargestellte Objekt-Subskriptionsprüfmodul für die BDocs verwendet wird, die mit der intelligenten Replikation gemäß Figur 7 repliziert werden.

Nach dem Start 1401 des Bulk-Subskriptionsprüfmoduls wird in dem Schritt 1402 ein in der Administrationsstation AS generierter Bulk-Subskriptions-Job übernommen. Er enthält für ein im Wege der Bulk-Replikation verteiltes BDoc (zum Beispiel Produkt-Stammdaten) Links zu allen nach dem aktuellen Stand gültigen Adressaten. In dem Schritt 1403 werden aus der Bulk-LUT die dort registrierten Adressaten des entsprechenden BDocs herausgelesen. Anschließend werden in dem Schritt 1404 mittels der in dem Bulk-Subskriptions-Job enthaltenen Links die entsprechenden Subskribenten aus der Subskriptions-Tabelle ST ausgelesen. Durch Vergleich der in den Schritten 1403 und 1404 gewonnenen Daten werden in dem Schritt 1405 neue und nicht mehr aktuelle (Ex)Adressaten bestimmt. Sofern eine nachfolgende Abfrage 1406, ob neue Adressaten festgestellt wurden, zu einem positiven Ergebnis führt, werden in einem Schritt 1407 entsprechende Einträge für die Bulk-LUT generiert und eingetragen. Außerdem werden in dem Schritt 1408 Extract-Jobs generiert und in die Extractor-Queue EXQ eingestellt, durch deren Abarbeitung die entsprechenden Insert-Operationen veranlaßt werden.

Entsprechend werden im Falle einer positiven Antwort auf eine weitere Abfrage 1409, ob Ex-Adressaten festgestellt wurden, in einem Schritt 1410 Löschaufträge generiert, durch die die entsprechenden Einträge in der Bulk-LUT gelöscht werden. Auch hier werden in einem Schritt 1411 Extractor-Jobs generiert, bei deren Abarbeitung BDocs mit Löschvermerken erzeugt werden, die zum Löschen der entsprechenden Daten in den Knotensystemen führen. Der Schritt 1412 markiert das Ende des Moduls.

Nach dem Start 1501 des in Fig. 15 dargestellten Objekt-Subskriptionsprüfmoduls wird in dem Schritt 1502 ein von der Administrationsstation AS generierter Objekt-Subskriptions-Job übernommen, der eine Zuordnung zwischen entsprechenden Inhalten verteilungskritischer Datenfelder und den betreffenden Adressaten enthält. Er enthält also beispielsweise die Angabe, daß für ein Vertriebsgebiet A Außendienstmitarbeiter 1, 3, 5 und 8 und für ein Vertriebsgebiet B Außendienstmitarbeiter 2, 4, 6 und 7 zuständig sein sollen.

In einem nachfolgenden Schritt 1503 werden aus der konsolidierten Datenbank CD die Schlüssel aller BDocs herausgelesen, für die diese Bedingungen erfüllt sind, also beispielsweise alle Kunden, die in einem ihr Vertriebsgebiet markierenden Datenfeld den Eintrag A haben. Schließlich werden in einem Schritt 1504 für alle diese BDocs Realignment-Jobs generiert und die Realignment Queue RAQ eingestellt, so daß sie (unabhängig und asynchron) von dem anhand der Figuren 9 bis 12 beschriebenen Realignment-Modul bearbeitet werden. Danach ist der Modul beendet (1505).

Die Erfindung ermöglicht eine in mehrfacher Hinsicht besonders vorteilhafte Lösung der mit der Datenpflege in einem Netzwerk teilweise replizierten Datenbanksysteme verbundenen Probleme. Insbesondere erlaubt sie mit guter Performance den Aufbau und Betrieb von Datenbank-Netzwerksystemen mit einer sehr großén Teilnehmerzahl (mehr als 10 000 Teilnehmer) und ermöglicht eine außerordentlich flexible und verhältnismäßig einfache Anpassung an die Bedürfnisse des jeweiligen Betreibers des Datenbank-Netzwerksystems.

Ein charakteristisches Element ist das Zusammenwirken von asynchron und unabhängig voneinander arbeitenden Programmodulen, die jeweils eine definierte Aufgabe erfüllen und über definierte Schnittstellen miteinander kommunizieren. Eine zentrale Funktion ist die Replikation auf Basis von Lookup-Tabellen, aus denen die zu dem jeweiligen Zeitpunkt aktuellen Adressaten eines Replikationsobjektes (ohne Berücksichtigung eventueller Änderungen aufgrund der in dem Replikationsobjekt codierten Änderungsinformation) herausgelesen werden, ohne daß eine Prozessierung von Daten erforderlich ist. Soweit die Änderungsinformation eine Änderung hinsichtlich der Verteilung an die Adressaten in dem Netzwerksystem nach sich zieht, werden die Lookup-Tabellen mittels eines asynchron durchgeführten Realignment-Prozesses angepaßt. Die Übertragung von Neuanlagen und Löschungen an die zuständigen Adressaten erfolgt ebenfalls im Rahmen des Realignment, nachdem neue Adressaten und Ex-Adressaten festgestellt wurden.

## Patentansprüche

1. Verfahren zur Datenpflege in einem offline-verteilten Datenbank-Netzwerksystems (DBNS), welches ein Zentralsystem (CS) mit einer zentralen Datenbank (CD) und eine Mehrzahl von Knotensystemen (NS) mit lokalen Datenbanken (LD) umfaßt, wobei
die lokalen Datenbanken (LD) mindestens teilweise unterschiedliche Teilmengen der Daten der zentralen Datenbank (CD) enthalten,
Änderungsinformationen zu den in den Datenbanken (CD,LD) des Datenbank-Netzwerksystems (DBNS) gespeicherten Daten in einer Mehrzahl der Knotensysteme (NS) erfaßt werden,
die Änderungsinformationen bei bestehender Online-Verbindung als in mehreren unterschiedlichen Typen strukturierte, einen Identifikationsschlüssel enthaltende Replikationsobjekte von den Knotensystemen zu dem Zentralsystem oder von dem Zentralsystem zu den Knotensystemen übertragen werden,
die Replikationsobjekte bei fehlender Online-Verbindung in einer Ausgangsschlange für eine spätere Übertragung bereitgestellt werden,
**dadurch gekennzeichnet, daß**
die Replikationsobjekte mit den Änderungsinformationen in dem Zentralsystem (CS) in einem Replikations-Algorithmus mittels mindestens einer Lookup-Tabelle (LUT) den Knotensystemen (NS), an die sie übermittelt werden sollen, als Adressaten zugeordnet werden und
die mindestens eine Lookup-Tabelle unter Berücksichtigung der Änderungsinformationen in einem Realignment-Algorithmus aktualisiert wird.

2. Verfahren nach Anspruch 1, **dadurch gekennzeichnet, daß** die Replikationsobjekte eine Zerlegung der gesamten Datenmenge bilden, die zwischen den Datenbanken (CD,LD) des Datenbank-Netzwerksystems (DBNS) ausgetauscht wird.

3. Verfahren nach einem der Ansprüche 1 oder 2, **dadurch gekennzeichnet, daß** die Replikationsobjekte eine Identifikation ihres Typs und eine Identifikation der Datenbankoperation Update, Insert oder Delete, die der in dem Replikationsobjekt codierten Änderungsinformation entspricht, enthalten.

4. Verfahren nach einem der vorhergehenden Ansprüche, **dadurch gekennzeichnet, daß** die Verarbeitung der Replikationsobjekte in dem Zentralsystem (CS) mittels einer Flußsteuerung (FC) gemäß einer für den Typ des Replikationsobjektes spezifischen Flußdefinition (FD) gesteuert wird.

5. Verfahren nach einem der vorhergehenden Ansprüche, **dadurch gekennzeichnet, daß** zur Übertragung der Änderungsinformation von dem Zentralsystem (CS) zu den Knotensystemen (NS) Remote-Calls (qRFC) verwendet werden, die so ausgebildet sind, daß für mehrere in einer Ausgangsschlange stehende Calls benötigte gemeinsame Daten nur einmal gespeichert werden müssen.

6. Verfahren nach einem der vorhergehenden Ansprüche, **dadurch gekennzeichnet, daß** mindestens zwei Typen von Lookup-Tabellen verwendet werden, von denen ein erster Typ (B-LUT) eine Zuordnung zwischen Typen von Replikationsobjekten und den Adressaten enthält und ein zweiter Typ (O-LUT) eine Zuordnung zwischen Instanzen von Replikationsobjekten und den Adressaten enthält.

7. Verfahren nach Anspruch 6, **dadurch gekennzeichnet, daß** mehrere Lookup-Tabellen des zweiten Typs (O-LUT) verwendet werden, die jeweils Zuordnungen zwischen den Instanzen eines Replikationsobjekt-Typs und den Adressaten der Instanzen enthalten.

8. Verfahren nach einem der Ansprüche 6 oder 7, **dadurch gekennzeichnet, daß** in Abhängigkeit von dem Typ des Replikationsobjektes unterschiedliche Typen von Replikations-Algorithmen durchgeführt werden, wobei
mittels eines ersten Replikations-Algorithmus-Typs (Bulk Replication) eine bestimmte Teilmenge der Replikationsobjekte in Abhängigkeit von ihrem Typ unter Verwendung einer Lookup-Tabelle des ersten Typs (B-LUT) den Adressaten zugeordnet werden und
mittels eines zweiten Replikations-Algorithmus-Typs (Intelligent Replication) eine bestimmte, mit der ersten Teilmenge nicht überlappende Teilmenge der Replikationsobjekte in Abhängigkeit von ihrer Instanz unter Verwendung einer Lookup-Tabelle des zweiten Typs (O-LUT) den Adressaten zugeordnet wird.

9. Verfahren nach Anspruch 8, **dadurch gekennzeichnet, daß** mittels eines dritten Replikations-Algorithmus-Typs (Dependent Replication) eine bestimmte dritte Teilmenge von Replikationsobjekten, die mit der ersten und der zweiten Teilmenge nicht überlappt, in Abhängigkeit von der für ein übergeordnetes Replikationsobjekt in einer Lookup-Tabelle des zweiten Typs (O-LUT) eingetragenen Zuordnung den Adressaten zugeordnet werden.

10. Verfahren nach einem der vorhergehenden Ansprüche, **dadurch gekennzeichnet, daß** der Realignment-Algorithmus unabhängig von dem Replikations-Algorithmus und asynchron zu diesem durchgeführt wird.

11. Verfahren nach einem der Ansprüche 3 bis 10, **dadurch gekennzeichnet, daß** in dem Replikations-Algorithmus auf Basis einer Abfrage (703) der Identifikation der Datenbankoperation ein Job für den Realignment-Algorithmus generiert wird, wenn die Datenbankoperatiön, die der in dem bearbeiteten Replikationsobjekt codierten Änderungsinformation entspricht, eine Neuanlage (Insert) oder Löschung (Delete) ist.

12. Verfahren nach einem der Ansprüche 3 bis 10, **dadurch gekennzeichnet, daß** in dem Replikations-Algorithmus auf Basis einer Abfrage (703,706) der Identifikation der Datenbankoperation ein Job für den Realignment-Algorithmus generiert wird, wenn die Datenbankoperation, die der in dem bearbeiteten Replikationsobjekt codierten Änderungsinformation entspricht, eine Modifikation (Update) ist und die Daten in mindestens einem vorbestimmten verteilungskritischen Datenfeld des Replikationsobjektes geändert wurden.

13. Verfahren nach Anspruch 8 in Verbindung mit einem der Ansprüche 11 oder 12, **dadurch gekennzeichnet, daß** die Abfrage (703) der Identifikation der Datenbankoperation in dem Ablauf des zweiten Replikations-Algorithmus-Typs (Intelligent Replication) erfolgt.

14. Verfahren nach einem der Ansprüche 10 bis 13, **dadurch gekennzeichnet, daß** in den Realignment-Algorithmus der Inhalt des verteilungskritischen Datenfeldes mit in einer Subskriptionstabelle ST vorgegebenen Verteilungsregeln verglichen und auf Basis dieses Vergleiches die Lookup-Tabelle (O-LUT) aktualisiert wird.

15. Verfahren nach einem der Ansprüche 10 bis 14, **dadurch gekennzeichnet, daß** in dem Realignment-Algorithmus eine Lookup-Tabelle eines Replikationsobjektes (O-LUT) unter Berücksichtigung der Lookup-Tabelle (SRO-LUT) eines übergeordneten Replikationsobjektes aktualisiert wird.

16. Verfahren nach einem der Ansprüche 10 bis 15, **dadurch gekennzeichnet, daß** in dem Realignment-Algorithmus zunächst alle unter Berücksichtigung der in dem Replikationsobjekt codierten Änderungsinformation aktuellen Adressaten bestimmt, diese mit den in einer Lookup-Tabelle (O-LUT) verzeichneten Adressaten verglichen werden, um zusätzliche neue Adressaten und nicht mehr aktuelle Ex-Adressaten zu bestimmen und die Information über die neuen und die Ex-Adressaten zur Übernahme in die Lookup-Tabelle (O-LUT) bereitgestellt wird.

17. Verfahren nach Anspruch 16, **dadurch gekennzeichnet, daß** in dem Realignment-Algorithmus nach der Bestimmung der neuen und der Ex-Adressaten die notwendigen Insert-Operationen bei den neuen Adressaten und Delete-Operationen bei den Ex-Adressaten eingeleitet werden, durch die den neuen Adressaten der vollständige Dateninhalt des in dem Realignment-Algorithmus bearbeiteten Replikationsobjektes übermittelt wird bzw. der dem Replikationsobjekt entsprechende Dateninhalt in den Datenbanken der Ex-Adressaten gelöscht wird.

18. Verfahren nach Anspruch 17, **dadurch gekennzeichnet, daß** die notwendigen Insert- oder Delete-Operationen mittels eines gesonderten Extrakt-Algorithmus, der unabhängig von dem Realignment-Algorithmus und asynchron zu diesem abläuft, eingeleitet werden, in welchem Replikationsobjekte erzeugt werden, die zur Durchführung der Insert-Operation an die neuen Adressaten bzw. zur Durchführung der Delete-Operationen an die Ex-Adressaten übermittelt werden.

19. Verfahren nach einem der Ansprüche 17 oder 18, **dadurch gekennzeichnet, daß** die neuen Adressaten und die Ex-Adressaten erst in die Lookup-Tabelle LUT übernommen werden, nachdem sichergestellt ist, daß die notwendigen Insert- oder Delete-Operationen ausgeführt werden, bevor erstmalig in einem Replikationsalgorithmus auf die geänderte Lookup-Tabelle zugegriffen wird.

20. Verfahren nach einem der vorhergehenden Ansprüche, **dadurch gekennzeichnet, daß** zur Berücksichtigung von in den Replikationsobjekten codierten Verknüpfungen zu anderen Replikationsobjekten in dem Realignment-Algorithmus Cluster von miteinander verknüpften Replikationsobjekten gebildet werden, für die in einer for-Schleife zunächst alle unter Berücksichtigung der in dem Replikationsobjekt codierten Änderungsinformation aktuellen Adressaten bestimmt, diese mit den in einer Lookup-Tabelle (O-LUT) verzeichneten Adressaten verglichen werden, um zusätzliche neue Adressaten und nicht mehr aktuelle Ex-Adressaten zu bestimmen und die Information über die neuen und die Ex-Adressaten für alle Replikationsobjekte des Clusters nach Beendigung der for-Schleife zur Übernahme in die Lookup-Tabelle (O-LUT) bereitgestellt wird.

21. Verfahren nach einem der vorhergehenden Ansprüche, **dadurch gekennzeichnet, daß** die Replikationsobjekte durch in dem gesamten Datenbank-Netzwerksystem eindeutige Schlüssel identifiziert sind.

22. Computerprogrammprodukt, das direkt in den Speicher eines digitalen Computers geladen werden kann und Softwarecodeabschnitte umfaßt, mit denen die Schritte des Verfahrens nach einem der Ansprüche 1 bis 20 ausgeführt werden, wenn das Produkt auf einem Computer läuft.

23. Computergeeignetes Speichermedium mit einem Computerprogrammprodukt nach Anspruch 22.

24. Datenbank-Netzwerksystem enthaltend ein Computerprogrammprodukt nach Anspruch 22.

## Claims

1. Method for data maintenance in an offline-distributed database network system (DBNS) which comprises a central system (CS) having a central database (CD), and a number of node systems (NS) having local databases (LD), wherein
the local databases (LD) at least in some cases contain different subsets of the data from the central database (CD),
change information relating to the data stored in the databases (CD, LD) in the database network system (DBNS) is recorded in a plurality of node systems (NS),
the change information is transmitted, when an online connection exists, as replication objects which are structured in a plurality of different types and contain an identification key, from the node systems to the central system or from the central system to the node systems,
if there is no online connection, the replication objects are queued, in an outbound queue, for subsequent transmission,
**characterized in that**
the replication objects are, in a replication algorithm in the central system (CS), allocated by means of at least one lookup table (LUT) together with the change information to the node systems (NS) as responsibles to which they are intended to be transmitted, and the at least one lookup table is updated, in a realignment algorithm, taking account of the change information.

2. Method according to claim 1, **characterized in that** the replication objects form a breakdown of all the data sets which are exchanged between the databases (CD, LD) in the database network system (DBNS).

3. Method according to any one of claims 1 or 2, **characterized in that** the replication objects contain an identification of their type and an identification of the database operation update, insert or delete, which corresponds to the change information coded in the replication object.

4. Method according to any one of the preceding claims, **characterized in that** the processing of the replication objects in the central system (CS) is controlled by means of a flow control (FC) in accordance with a flow definition (FD) which is specific for the type of replication object.

5. Method according to any one of the preceding claims, **characterized in that** remote calls (qRFC) are used for transmitting change information from the central system (CS) to the node systems (NS) and are designed such that common data items which are required for a number of calls in an outbound queue need be stored only once.

6. Method according to any one of the preceding claims, **characterized in that** at least two types of lookup tables are used, of which a first type (B-LUT) contains an allocation between types of replication objects and the responsibles, and a second type (O-LUT) contains an allocation between instances of replication objects and the responsibles.

7. Method according to claim 6, **characterized in that** a plurality of lookup tables of the second type (O-LUT) are used, which each contain allocations between the instances of a replication object type and the responsibles of the instances.

8. Method according to one of claims 6 or 7, **characterized in that** different types of replication algorithms are carried out depending on the type of replication object, with
a first replication algorithm type (bulk replication) being used to allocate a specific subset of the replication objects to the responsibles as a function of the type of said replication objects, using a lookup table of the first type (B-LUT), and a second replication algorithm type (intelligent replication) being used to allocate a specific subset of replication objects, which does not overlap the first subset, to the responsibles as a function of their instance using a lookup table of the second type (O-LUT).

9. Method according to claim 8, **characterized in that** a third replication algorithm type (dependent replication) is used to allocate a specific third subset of the replication objects, which does not overlap the first or the second subset, to the responsibles as a function of the allocation entered for a higher-level replication object in a lookup table of the second type (O-LUT).

10. Method according to any one of the preceding claims, **characterized in that** the realignment algorithm is carried out independently of the replication algorithm, and asynchronously with respect to it.

11. Method according to any one of claims 3 to 10, **characterized in that** a job for the realignment algorithm is generated in the replication algorithm on the basis of a check (703) of the identification of the database operation, if the database operation which corresponds to the change information coded in the processed replication object is an insertion or a deletion.

12. Method according to any one of claims 3 to 10, **characterized in that** a job for the realignment algorithm is generated in the replication algorithm, on the basis of a check (703, 706) of the identification of the database operation, if the database operation which corresponds to the change information coded in the processed replication object is a modification (update), and the data in at least one predetermined distribution-critical data field of the replication object have been changed.

13. Method according to claim 8 in combination with any one of claims 11 or 12, **characterized in that** the check (703) of the identification of the database operation is carried out in the course of the second replication algorithm type (intelligent replication).

14. Method according to any one of claims 10 to 13, **characterized in that**, in the realignment algorithm, the contents of the distribution-critical data field are compared with distribution rules which are predetermined in a subscription table ST, and the lookup table (O-LUT) is updated on the basis of this comparison.

15. Method according to any one of claims 10 to 14, **characterized in that**, in the realignment algorithm, a lookup table for a replication object (O-LUT) is updated taking account of the lookup table (SRO-LUT) for a higher-level replication object.

16. Method according to any one of claims 10 to 15, **characterized in that**, in the realignment algorithm, all the responsibles who are up-to-date taking account of the change information coded in the replication object are first of all determined, these responsibles are compared with the responsibles listed in a lookup table (O-LUT) in order to determine additional new responsibles and ex-responsibles who are no longer up-to-date, and the information about the new responsibles and the ex-responsibles is provided for transfer to the lookup table (O-LUT).

17. Method according to claim 16, **characterized in that**, in the realignment algorithm, once the new responsibles and the ex-responsibles have been determined, the necessary insert operations for the new responsibles and delete operations for the ex-responsibles are initiated, by means of which the complete data contents of the replication object processed in the realignment algorithm are transmitted to the new responsibles, and the data contents which correspond to the replication object are deleted in the databases of the ex-responsibles.

18. Method according to claim 17, **characterized in that** the necessary insert or delete operations are initiated by means of a separate extract algorithm, which runs independently of the realignment algorithm and asynchronously with respect to it, in which replication objects are produced which are transmitted to the new responsibles in order to carry out the insert operation, and to the ex-responsibles in order to carry out the delete operations.

19. Method according to any one of claims 17 or 18, **characterized in that** the new responsibles and the ex-responsibles are not transferred to the lookup table (LUT) until assurance has been obtained that the necessary insert or delete operations are carried out, before the changed lookup table is accessed for the first time in a replication algorithm.

20. Method according to any one of the preceding claims, **characterized in that** clusters of replication objects which are linked to one another are formed in order to take account of links, which are coded in the replication objects, to other replication objects in the realignment algorithm, for which clusters all those responsibles who are up-to-date taking account of the change information coded in the replication object are first of all determined in a for-loop, these up-to-date responsibles are compared with the responsibles listed in a lookup table (O-LUT) in order to determine any additional new responsibles and ex-responsibles who are no longer up-to-date and the information about the new responsibles and the ex-responsibles for all the replication objects in the cluster is provided for transfer to the lookup table (O-LUT) after completion of the for-loop.

21. Method according to any one of the preceding claims, **characterized in that** the replication objects are identified by keys which are unique throughout the entire database network system.

22. Computer program product, which can be loaded directly into the memory of a digital computer and which comprises software code sections by which the steps of the method according to one of claims 1 to 20 are carried out when the product is running on a computer.

23. Computer-compatible memory medium containing a computer program product according to claim 22.

24. Database network system containing a computer program product according to claim 22.

## Revendications

1. Procédé de maintenance de données dans un système de réseau de banques de données (DBNS) distribué autonome, qui comprend un système central (CS) avec une banque de données centrale (CD) et une pluralité de systèmes de noeuds (NS) avec des banques de données locales (LD), dans lequel
les banques de données locales (LD) contiennent des sous-ensembles au moins en partie différents des données de la banque de données centrale (CD),
des informations de modification concernant les données mémorisées dans les banques de données (CD, LD) du système de réseau de banques de données (DBNS) sont saisies dans une pluralité de systèmes de noeuds (NS),
en présence d'une liaison en ligne, les informations de modification sont transmises, sous forme d'objets de réplication structurés en plusieurs types différents et contenant une clé d'identification, des systèmes de noeuds au système central ou du système central aux systèmes de noeuds,
en l'absence d'une liaison en ligne, les objets de réplication sont disponibles dans une file de sortie pour une transmission ultérieure,
**caractérisé en ce que**
les objets de réplication avec les informations de modification sont associés en tant que destinataires, dans le système central (CS) dans un algorithme de réplication au moyen d'au moins une table de consultation (LUT), aux systèmes de noeuds (NS) auxquels ils doivent être transmis, et
la au moins une table de consultation est mise à jour dans un algorithme de réalignement en tenant compte des informations de modification .

2. Procédé selon la revendication 1, **caractérisé en ce que** les objets de réplication constituent une partition de l'ensemble de données total, qui est échangée entre les banques de données (CD, LD) du système de réseau de banques de données (DBNS).

3. Procédé selon l'une des revendications 1 ou 2, **caractérisé en ce que** les objets de réplication contiennent une identification de leur type et une identification de l'opération sur banque de données de mise à jour, insertion ou suppression, qui correspond à l'information de modification codée dans l'objet de réplication.

4. Procédé selon l'une des revendications précédentes, **caractérisé en ce que** le traitement des objets de réplication dans le système central (CS) est commandé au moyen d'une commande de flux (FC) selon une définition de flux (FD) spécifique pour le type de l'objet de réplication.

5. Procédé selon l'une des revendications précédentes, **caractérisé en ce que**, pour la transmission de l'information de modification du système central (CS) aux systèmes de noeuds (NS), on utilise des appels à distance (qRFC), qui sont conçus de telle sorte que pour plusieurs appels placés dans une file de sortie les données communes nécessaires doivent être mémorisées une seule fois.

6. Procédé selon l'une des revendications précédentes, **caractérisé en ce qu'**on utilise au moins deux types de tables de conversion, dont un premier type (B-LUT) contient une association entre des types d'objets de réplication et les destinataires, et un deuxième type (O-LUT) une association entre des instances d'objets de réplication et les destinataires.

7. Procédé selon la revendication 6, **caractérisé en ce qu'**on utilise plusieurs tables de conversion du deuxième type (O-LUT), qui contiennent chacune des associations entre les instances d'un type d'objet de réplication et les destinataires des instances.

8. Procédé selon l'une des revendications 6 ou 7, **caractérisé en ce que**, en fonction du type de l'objet de réplication, différents types d'algorithmes de réplication sont mis en oeuvre, à savoir
au moyen d'un premier type d'algorithme de réplication (réplication par lots), un sous-ensemble déterminé d'objets de réplication est associé aux destinataires en fonction du type de ceux-ci en utilisant une table de consultation du premier type (B-LUT), et
au moyen d'un deuxième type d'algorithme de réplication (réplication intelligente), un sous-ensemble déterminé d'objets de réplication, qui ne chevauche pas le premier sous-ensemble, est associé aux destinataires en fonction de leur instance en utilisant une table de consultation du deuxième type (O-LUT).

9. Procédé selon la revendication 8, **caractérisé en ce qu'**au moyen d'un troisième type d'algorithme de réplication (réplication dépendante), un troisième sous-ensemble déterminé d'objets de réplication, qui ne chevauche pas le premier et le deuxième sous-ensemble, est associé aux destinataires en fonction de l'association enregistrée pour un objet de réplication de niveau supérieur dans une table de consultation du deuxième type (O-LUT).

10. Procédé selon l'une des revendications précédentes, **caractérisé en ce que** l'algorithme de réalignement est mis en oeuvre indépendamment de l'algorithme de réplication et de manière asynchrone à celui-ci.

11. Procédé selon l'une des revendications 3 à 10, **caractérisé en ce qu'**une tâche pour l'algorithme de réalignement est générée dans l'algorithme de réplication sur la base d'une interrogation (703) quant à l'identification de l'opération sur banque de données, si l'opération sur banque de données qui correspond à l'information de modification codée dans l'objet de réplication traité est une insertion (Insert) ou une suppression (Delete).

12. Procédé selon l'une des revendications 3 à 10, **caractérisé en ce qu'**une tâche pour l'algorithme de réalignement est générée dans l'algorithme de réplication sur la base d'une interrogation (703, 706) quant à l'identification de l'opération sur banque de données, si l'opération sur banque de données qui correspond à l'information de modification codée dans l'objet de réplication traité est une modification (Update) et si les données ont été modifiées dans au moins un champ de données prédéterminé, critique pour la distribution, de l'objet de réplication.

13. Procédé selon la revendication 8 en liaison avec l'une des revendications 11 ou 12, **caractérisé en ce que** l'interrogation (703) quant à l'identification de l'opération sur banque de données est effectuée pendant le déroulement du deuxième type d'algorithme de réplication (réplication intelligente).

14. Procédé selon l'une des revendications 10 à 13, **caractérisé en ce que** le contenu du champ de données critique pour la distribution est comparé dans l'algorithme de réalignement avec des règles de distribution prédéfinies dans une table de souscription (ST) et la table de consultation (O-LUT) est mise à jour sur la base de cette comparaison.

15. Procédé selon l'une des revendications 10 à 14, **caractérisé en ce qu'**une table de consultation d'un objet de réplication (O-LUT) est mise à jour dans l'algorithme de réalignement en tenant compte de la table de consultation (SRO-LUT) d'un objet de réplication de niveau supérieur.

16. Procédé selon l'une des revendications 10 à 15, **caractérisé en ce que** tous les destinataires actuels, en tenant compte de l'information de modification codée dans l'objet de réplication, sont tout d'abord déterminés dans l'algorithme de réalignement, ceux-ci sont comparés aux destinataires enregistrés dans une table de consultation (O-LUT) afin de déterminer de nouveaux destinataires supplémentaires et non plus des ex-destinataires actuels, et l'information sur les nouveaux et les ex-destinataires est préparée pour le transfert dans la table de consultation (O-LUT).

17. Procédé selon la revendication 16, **caractérisé en ce que**, dans l'algorithme de réalignement, après la détermination des nouveaux et des ex-destinataires, sont effectuées les opérations d'insertion nécessaires pour les nouveaux destinataires et les opérations de suppression nécessaires pour les ex-destinataires, par lesquelles le contenu de données complet de l'objet de réplication traité dans l'algorithme de réalignement est transmis aux nouveaux destinataires ou le contenu de données correspondant à l'objet de réplication est supprimé dans les banques de données des ex-destinataires.

18. Procédé selon la revendication 17, **caractérisé en ce que** les opérations d'insertion ou de suppression nécessaires sont effectuées au moyen d'un algorithme d'extraction spécial, qui se déroule indépendamment de l'algorithme de réalignement et de manière asynchrone à celui-ci et dans lequel sont générés des objets de réplication qui sont transmis aux nouveaux destinataires pour effectuer l'opération d'insertion ou aux ex-destinataires pour effectuer les opérations de suppression.

19. Procédé selon l'une des revendications 17 ou 18, **caractérisé en ce que** les nouveaux destinataires et les ex-destinataires sont enregistrés dans la table de consultation (LUT) seulement après assurance que les opérations d'insertion ou de suppression nécessaires ont été effectuées, avant d'accéder pour la première fois dans un algorithme de réplication à la table de consultation modifiée.

20. Procédé selon l'une des revendications précédentes, **caractérisé en ce que**, pour tenir compte de liaisons codées dans les objets de réplication vers d'autres objets de réplication, des groupes d'objets de réplication liés entre eux sont formés dans l'algorithme de réalignement, pour lesquels tous les destinataires actuels, en tenant compte de l'information de modification codée dans l'objet de réplication, sont tout d'abord déterminés dans une boucle POUR, ceux-ci sont comparés aux destinataires enregistrés dans une table de consultation (O-LUT) afin de déterminer de nouveaux destinataires supplémentaires et non plus des ex-destinataires actuels, et l'information sur les nouveaux et les ex-destinataires pour tous les objets de réplication du groupe à la fin de la boucle POUR est préparée pour le transfert dans la table de consultation (O-LUT).

21. Procédé selon l'une des revendications précédentes, **caractérisé en ce que** les objets de réplication sont identifiés par des clés univoques dans l'ensemble du système de réseau de banques de données.

22. Produit de programme informatique qui peut être chargé directement dans la mémoire d'un ordinateur numérique et comporte des segments de code de programmation, par lesquels sont mises en oeuvre les étapes du procédé selon l'une des revendications 1 à 20, lorsque le produit s'exécute sur un ordinateur.

23. Support de mémoire adapté à un ordinateur comprenant un produit de programme informatique selon la revendication 22.

24. Système de réseau de banques de données contenant un produit de programme informatique selon la revendication 22.
